# EUROPEAN PATENT APPLICATION

(11) **EP 4 692 680 A1**
(43) Date of publication of application: **11.02.2026**
(21) Application number: 24836149.5
(22) Date of filing: 01.04.2024
(51) Int. Cl.: F25B 21/00, F25B 41/20, F25B 49/00

(54) **COOLING CYCLE APPARATUS AND HOME APPLIANCE INCLUDING SAME**

(30) Priority: 03.07.2023 KR 20230086103; 08.09.2023 KR 20230119931
(71) Applicant: Samsung Electronics Co., Ltd., Suwon-si, Gyeonggi-do 16677 (KR)
(72) Inventor: SUH, Junwoo, Suwon-si Gyeonggi-do 16677 (KR); KIM, Minsoo, Suwon-si Gyeonggi-do 16677 (KR)
(74) Representative: Gulde & Partner
(86) International application number: PCT/KR2024/004158
(87) International publication number: WO 2025/009698

(57) **Abstract**

A cooling cycle apparatus including: a first heat exchanger configured to emit heat and a second heat exchanger configured to absorb heat; a magnetic cooling device comprising a magnetocaloric material and configured to heat a first fluid flowing into the first heat exchanger and cool a second fluid flowing into the second heat exchanger; and an auxiliary cooling device comprising a heater configured to further heat the first fluid flowing into the first heat exchanger, and a cooler configured to further cool the second fluid flowing to the second heat exchanger.

## Description

### [TECHNICAL FIELD]

The disclosure relates to a cooling cycle apparatus including a magnetic cooling device, and an appliance including the same.

### [BACKGROUND ART]

Generally, among appliances, a refrigerator and an air conditioner include cooling devices to supply cold air to spaces that require cooling. For example, the refrigerator requires a cooling device to supply cold air to a storage compartment in which food is stored in order to keep food fresh for a long period of time. In addition, for example, the air conditioner requires a cooling device to supply cold air to an indoor space in order to control temperature and humidity suitable for human activity.

A conventional refrigerator and air conditioner use a cooling cycle apparatus configured to repeatedly compress and expand a refrigerant. However, as for a conventional cooling cycle apparatus, the refrigerant used to operate the device may accelerate global warming, and there is a possibility of explosion due to refrigerant leakage.

Therefore, there is a growing need of an environmentally friendly cooling device that does not accelerate global warming and has a low possibility of explosion. A cooling cycle apparatus using magnetocaloric effect may be used to implement the eco-friendly cooling device without using existing refrigerants, and active research has been conducted recently.

### [TECHNICAL PROBLEM]

According to an aspect of the disclosure, provided is an environmentally friendly cooling cycle apparatus and an appliance including the same.

### [TECHNICAL SOLUTION]

According to an aspect of the disclosure, a cooling cycle apparatus includes: a first heat exchanger configured to emit heat and a second heat exchanger configured to absorb heat; a magnetic cooling device comprising a magnetocaloric material and configured to heat a first fluid flowing into the first heat exchanger and cool a second fluid flowing into the second heat exchanger; and an auxiliary cooling device comprising a heater configured to further heat the first fluid flowing into the first heat exchanger, and a cooler configured to further cool the second fluid flowing to the second heat exchanger.

The auxiliary cooling device further includes a thermoelectric element which may be configured to heat the heater and cool the cooler, and the heater may be on one side of the thermoelectric element and the cooler may be on another side of the thermoelectric element.

The cooling cycle apparatus may further include a first pipe which may be configured to allow the first fluid to flow from the magnetic cooling device to the first heat exchanger and to form a heating flow path through the heater, and a second pipe which may be configured to allow the second fluid to flow from the magnetic cooling device to the second heat exchanger and to form a cooling flow path through the cooler, the heating flow path and the cooling flow path may be opened to allow the second fluid to be further cooled by passing through the cooler while allowing the first fluid to be further heated by passing through the heater.

The cooling cycle apparatus may further include a first valve in the first pipe which may be configured to open and close the heating flow path, a second valve in the second pipe which may be configured to open and close the cooling flow path, and a controller which may be configured to control the first valve and the second valve, the controller may operate the first valve and the second valve to allow the second fluid to be further cooled by passing through the cooler while allowing the first fluid to be further heated by passing through the heater.

The magnetic cooling device may further include a first magnetocaloric module including a first magnetocaloric material and a first internal flow path in which the first magnetocaloric material may be disposed, and may be configured to heat the first fluid based on a change in a magnetic field applied to the first magnetocaloric material, and a second magnetocaloric module including a second magnetocaloric material and a second internal flow path in which the second magnetocaloric material may be disposed, and may be configured to cool the second fluid based on a change in a magnetic field applied to the second magnetocaloric material, the first internal flow path may communicate with the heating flow path and the second internal flow path may communicate with the cooling flow path so as to allow the second fluid to be further cooled by passing through the cooler while allowing the first fluid to be further heated by passing through the heater.

The first magnetocaloric module may further include a first communication flow path which may be configured to connect the first internal flow path and the heating flow path and to allow the first fluid in the first internal flow path to flow from the second heat exchanger to the heater, and a second communication flow path which may be configured to connect the first internal flow path and the cooling flow path and to allow the second fluid in the first internal flow path to flow from the first heat exchanger to the cooler, the second magnetocaloric module may further include: a third communication flow path which may be configured to connect the second internal flow path and the heating flow path and to allow the first fluid in the second internal flow path to flow from the second heat exchanger to the heater, and a fourth communication flow path configured to connect the second internal flow path and the cooling flow path and to allow the second fluid in the second internal flow path to flow from the first heat exchanger to the cooler, and the controller may be further configured to control the first valve to open the first communication flow path of the first magnetocaloric module and to close the third communication flow path of the second magnetocaloric module, and control the second valve to close the second communication flow path of the first magnetocaloric module and to open the fourth communication flow path of the second magnetocaloric module.

The first fluid may be a liquid.

The cooler may include a first heat exchange portion which may be configured to exchange heat with the first fluid outside of the cooler, and a second heat exchange portion which may be configured to cool the second fluid flowing from the magnetic cooling device to the second heat exchanger.

The second fluid flowing through the second heat exchange portion of the cooler may be a liquid.

The cooling cycle apparatus may further include a first tank which may be configured to store the first fluid prior to being supplied to the first heat exchanger, and a second tank which may be configured to store the second fluid prior to being supplied to the second heat exchanger.

The first tank may be downstream from the heater and upstream from the first heat exchanger, and the second tank may be downstream from the cooler and upstream from the second heat exchanger.

The first fluid stored in the first tank may contact the heater, and the second fluid stored in the second tank may contact the cooler.

The magnetocaloric material may be provided in plurality, the plurality of magnetocaloric materials may have different Curie temperatures, and the magnetic cooling device may further include a magnet which may be configured to be rotatable on an outside of the plurality of magnetocaloric materials with respect to the plurality of magnetocaloric materials and apply a magnetic field to the plurality of magnetocaloric materials, and a driver which may be configured to rotate the magnet.

The plurality of magnetocaloric materials may be bar shaped or spherical shaped.

The plurality of magnetocaloric materials may be stacked on each other.

The magnet may be further configured to apply the magnetic field to one or more of the plurality of magnetocaloric materials.

The heater may include a first fin extending perpendicular to a direction in which the thermoelectric element extends, the first pipe penetrates the heater and the first fin, the cooler may include a second fin extending perpendicular to a direction in which the thermoelectric element extends, and the second pipe penetrates the cooler and the second fin.

The cooling cycle apparatus may further include a power terminal connected to the thermoelectric element and may be configured to control a temperature of the heater and the cooler.

A refrigerator may include the cooling cycle apparatus.

An air conditioner may include the cooling cycle apparatus.

### [ADVANTAGEOUS EFFECTS]

As is apparent from the above description, a cooling cycle apparatus may be environmentally friendly and capable of implementing a higher temperature and a lower temperature, and a refrigerator may include the cooling cycle apparatus.

Additional aspects of the disclosure will be set forth in part in the description which follows and, in part, will be obvious from the description, or may be learned by practice of the disclosure.

### [DESCRIPTION OF DRAWINGS]

The above and other aspects, features, and advantages of certain embodiments of the present disclosure will be more apparent from the following description taken in conjunction with the accompanying drawings, in which:
FIG. 1 is a schematic diagram of a cooling cycle apparatus according to one or more embodiments;
FIG. 2 is a schematic diagram of a magnetic cooling device in the cooling cycle apparatus according to one or more embodiments;
FIG. 3 is a schematic diagram of the magnetic cooling device in the cooling cycle apparatus according to one or more embodiments;
FIG. 4 is a schematic diagram of the magnetic cooling device in the cooling cycle apparatus according to one or more embodiments;
FIG. 5 is a schematic diagram of an auxiliary cooling device in the cooling cycle apparatus according to one or more embodiments;
FIG. 6 is a schematic diagram of the auxiliary cooling device in the cooling cycle apparatus according to one or more embodiments;
FIG. 7 is a schematic diagram of the magnetic cooling device in the cooling cycle apparatus according to one or more embodiments;
FIG. 8 is a flow diagram of a working fluid in the cooling cycle apparatus according to one or more embodiments;
FIG. 9 is a schematic diagram of the magnetic cooling device in the cooling cycle apparatus according to one or more embodiments;
FIG. 10 is a flow diagram of a working fluid in the cooling cycle apparatus according to one or more embodiments;
FIG. 11 is a control diagram of the cooling cycle apparatus according to one or more embodiments;
FIG. 12 is a schematic diagram of a cooling cycle apparatus according to one or more embodiments;
FIG. 13 is a schematic diagram of a cooling cycle apparatus according to one or more embodiments;
FIG. 14 is a perspective view of an appliance including the cooling cycle apparatus according to one or more embodiments;
FIG. 15 is a perspective view of an appliance including the cooling cycle apparatus according to one or more embodiments; and
FIG. 16 is a side cross-sectional view of the appliance including the cooling cycle apparatus according to one or more embodiments;

### [MODES OF THE INVENTION]

The one or more embodiments and the terms used therein are not intended to limit the technology disclosed herein to specific forms, and the disclosure should be understood to include various modifications, equivalents, and/or alternatives to the corresponding embodiments.

In describing the drawings, similar reference numerals may be used to designate similar constituent elements.

A singular expression may include a plural expression unless otherwise indicated herein or clearly contradicted by context.

The expressions "A or B," "at least one of A or/and B," or "one or more of A or/and B," "A, B or C," "at least one of A, B or/and C," or "one or more of A, B or/and C," and the like used herein may include any and all combinations of one or more of the associated listed items.

The term of "and / or" includes a plurality of combinations of relevant items or any one item among a plurality of relevant items.

Herein, the expressions "a first," "a second," etc., may simply be used to distinguish an element from other elements, but is not limited to another aspect (importance or order) of elements.

In the following detailed description, the terms of "front surface," "rear surface," "upper surface," "lower surface," "side surface," "front side," "rear side," "left side," "right side," "upper portion," "lower portion" and the like may be defined by the drawings, but the shape and the location of the element is not limited by the term.

In this disclosure, the terms "including", "having", and the like are used to specify features, numbers, steps, operations, elements, elements, or combinations thereof, but do not preclude the presence or addition of one or more of the features, elements, steps, operations, elements, elements, or combinations thereof.

When an element is said to be "connected," "coupled," "supported," or "contacted" with another element, this includes not only when elements are directly connected, coupled, supported or contacted, but also when elements are indirectly connected, coupled, supported or contacted through a third element.

Throughout the description, when an element is "on" another element, this includes not only when the element is in contact with the other element, but also when there is another element between the two elements.

Hereinafter one or more embodiments of the present disclosure will be described in detail with reference to the accompanying drawings

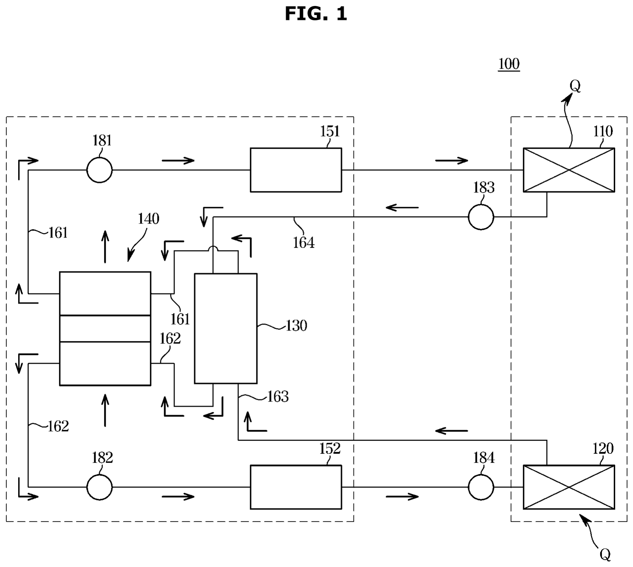

FIG. 1 is a schematic diagram of a cooling cycle apparatus according to one or more embodiments.

Referring to FIG. 1, a cooling cycle apparatus 100 according to one or more embodiments may include a first heat exchanger 110 and a second heat exchanger 120. The first heat exchanger 110 may be configured to emit heat. The second heat exchanger 120 may be configured to absorb heat.

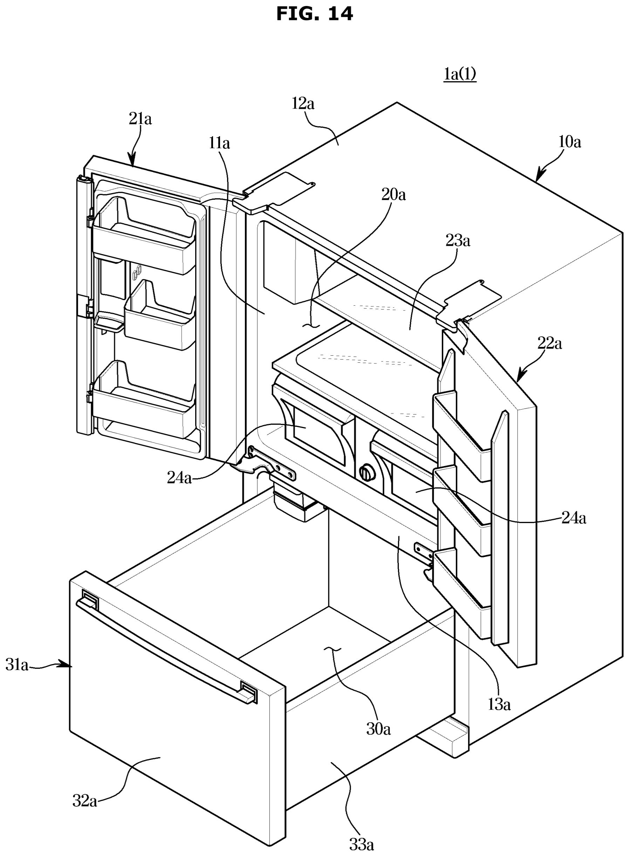

According to one or more embodiments, when an appliance including the cooling cycle apparatus 100 is a refrigerator, the first heat exchanger 110 may emit heat to the outside of a main body 10a of the refrigerator, and the second heat exchanger 120 may absorb heat from air that flows to storage compartments 20a and 30a (refer to FIG. 14). In addition, when the appliance including the cooling cycle apparatus 100 is an air conditioner, the first heat exchanger 110 may be provided in an outdoor unit to emit heat to the outside of the outdoor unit, and the second heat exchanger 120 may be provided in an indoor unit to absorb heat from air flowing into indoors.

The cooling cycle apparatus 100 may include a magnetic cooling device 130. The magnetic cooling device 130 may heat a fluid flowing into the first heat exchanger 110 and cool a fluid flowing into the second heat exchanger 120.

The magnetic cooling device 130 may cool and heat the fluid flowing through the magnetic cooling device 130 using the magnetocaloric effect. In the cooling cycle apparatus according to one or more embodiments, the magnetic cooling device 130 may use water or antifreeze rather instead of a refrigerant that is previously used, thereby reducing the risk of global warming and explosion compared to the cooling cycle apparatus using the conventional refrigerant.

The cooling cycle apparatus 100 may further include an auxiliary cooling device 140. The auxiliary cooling device 140 may include a device configured to additionally heat and/or cool the fluid passing through the magnetic cooling device 130. The auxiliary cooling device 140 may be disposed downstream of the magnetic cooling device 130. According to one or more embodiments, the auxiliary cooling device 140 may further heat the fluid, which flows to the first heat exchanger 110 through the magnetic cooling device 130, so as to assist in the heating of the magnetic cooling device 130, or the auxiliary cooling device 140 may further cool the fluid, which flows to the second heat exchanger 120 through the magnetic cooling device 130, so as to assist in the cooling of the magnetic cooling device 130.

According to one or more embodiments, the fluid flowing from the magnetic cooling device 130 to the first heat exchanger 110 may be heated, and the auxiliary cooling device 140 may additionally heat the fluid that is heated in the magnetic cooling device 130 and flows to the first heat exchanger 110. Further, the fluid flowing from the magnetic cooling device 130 to the second heat exchanger 120 may be cooled through the magnetic cooling device 130, and the auxiliary cooling device 140 may additionally cool the fluid that is cooled in the magnetic cooling device 130 and flows to the second heat exchanger 120.

According to one or more embodiments, the auxiliary cooling device 140 may include a thermoelectric device. The auxiliary cooling device 140 may cool and/or heat the fluid flowing from the magnetic cooling device 130 to the first heat exchanger 110 or the fluid flowing from the magnetic cooling device 130 to the second heat exchanger 120 using the thermoelectric effect. However, the auxiliary cooling device 140 is not limited to the thermoelectric devices. According to one or more embodiments, the auxiliary cooling device 140 may include a vapor cooling device, a cooling cycle apparatus using a refrigerant, an air-cooling device using a fan, or a water-cooling method using cooling water.

The cooling cycle apparatus 100 may include tanks 151 and 152. The tanks 151 and 152 may store the fluid flowing through the cooling cycle apparatus 100. The tanks 151 and 152 may be provided in plurality. The plurality of tanks 151 and 152 may include a first tank 151 and a second tank 152.

The first tank 151 may store a fluid before flowing to the first heat exchanger 110. According to one or more embodiments, the first tank 151 may be disposed upstream of the first heat exchanger 110 and downstream of the auxiliary cooling device 140.

The second tank 152 may store fluid before flowing to the second heat exchanger 120. According to one or more embodiments, the second tank 152 may be disposed upstream of the second heat exchanger 120 and downstream of the auxiliary cooling device 140.

A valve may be installed in the first tank 151 to regulate a flow rate and direction of the fluid flowing into the first heat exchanger 110. A valve may be installed in the second tank 152 to regulate a flow rate and direction of the fluid flowing into the second heat exchanger 120. However, the terms of "first" and "second" may not limit the configuration of the first tank 151 and the second tank 152. According to one or more embodiments, a configuration in which the fluid is stored before flowing to the first heat exchanger 110 may be the second tank, and a configuration in which the fluid is stored before flowing to the second heat exchanger 120 may be the first tank.

The cooling cycle apparatus 100 may include pipes 161, 162, 163, and 164. The pipes 161, 162, 163, and 164 may connect the plurality of heat exchangers 110 and 120, the plurality of tanks 151 and 152, the magnetic cooling device 130, and the auxiliary cooling device 140. The working fluid of the cooling cycle apparatus 100 may flow within the pipes 161, 162, 163, and 164.

A plurality of pipes 161, 162, 163, and 164 may be provided. The plurality of pipes 161, 162, 163, and 164 may include a first pipe 161. The first pipe 161 may connect the magnetic cooling device 130 and the first heat exchanger 110. The first pipe 161 may allow the working fluid to flow from the magnetic cooling device 130 to the first heat exchanger 110 by passing through the auxiliary cooling device 140 and the first tank 151. The plurality of pipes 161, 162, 163, and 164 may include a second pipe 162. The second pipe 162 may connect the magnetic cooling device 130 and the second heat exchanger 120. The second pipe 162 may allow the working fluid to flow from the magnetic cooling device 130 to the second heat exchanger 120 by passing through the auxiliary cooling device 140 and the second tank 152. The plurality of pipes 161, 162, 163, and 164 may include a third pipe 163. The third pipe 163 may connect the magnetic cooling device 130 and the second heat exchanger 120. The third pipe 163 may allow the working fluid to flow from the second heat exchanger 120 to the magnetic cooling device 130. The plurality of pipes 161, 162, 163, and 164 may include a fourth pipe 164. The fourth pipe 164 may connect the magnetic cooling device 130 and the first heat exchanger 110. The fourth pipe 164 may allow the working fluid to flow from the first heat exchanger 110 to the magnetic cooling device 130. However, the ordinal numbers of "first pipe", "second pipe", "third pipe", and "fourth pipe" may not limit the configuration thereof.

The cooling cycle apparatus 100 may include pumps 181, 182, 183, and 184. The pumps 181, 182, 183, and 184 may be installed in the pipes 161, 162, 163, and 164 to pump the working fluid to allow the fluid to flow to each component of the cooling cycle apparatus 100.

A plurality of pumps 181, 182, 183, and 184 may be provided. The plurality of pumps 181, 182, 183, and 184 may include a first pump 181. The first pump 181 may be installed on the first pipe 161 and configured to pump the working fluid flowing from the magnetic cooling device 130 to the first heat exchanger 110 through the auxiliary cooling device 140. The plurality of pumps 181, 182, 183, and 184 may include a second pump 182. The second pump 182 may be installed on the second pipe 162 and configured to pump the working fluid flowing from the magnetic cooling device 130 to the second heat exchanger 120 through the auxiliary cooling device 140. The plurality of pumps 181, 182, 183, and 184 may include a third pump 183. The third pump 183 may be installed on the fourth pipe 164 and configured to pump the working fluid flowing from the first heat exchanger 110 to the magnetic cooling device 130. The plurality of pumps 181, 182, 183, and 184 may include a fourth pump 184. The fourth pump 184 may be installed on the second pipe 162 and configured to pump the working fluid flowing to the second heat exchanger 120. Alternatively, the fourth pump 184 may be installed on the third pipe 163 to pump the working fluid flowing from the second heat exchanger 120 to the magnetic cooling device 130. However, the ordinal numbers of "first pump", "second pump", "third pump", and "fourth pump" may not limit the configuration thereof.

The working fluid may circulate through the cooling cycle apparatus 100. The working fluid may flow back to the first heat exchanger 110 by sequentially passing through the first heat exchanger 110, the magnetic cooling device 130, the auxiliary cooling device 140, the second heat exchanger 120, the magnetic cooling device 130, and the auxiliary cooling device 140. The working fluid flowing through the cooling cycle apparatus 100 may be a liquid.

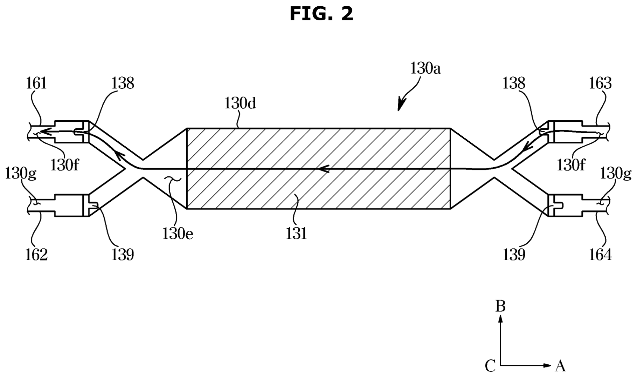

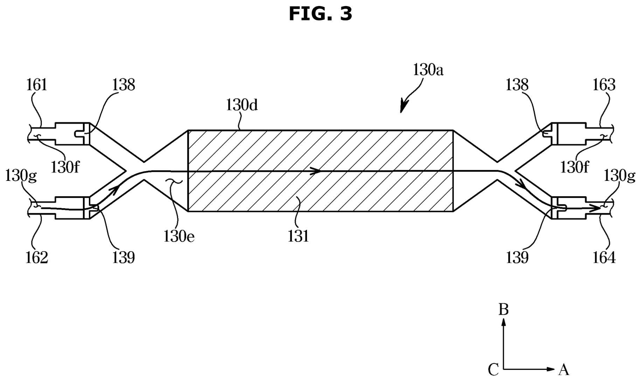

FIG. 2 is a schematic diagram of a magnetic cooling device in the cooling cycle apparatus according to one or more embodiments. FIG. 3 is a schematic diagram of the magnetic cooling device in the cooling cycle apparatus according to one or more embodiments.

Referring to FIGS. 2 and 3, in the cooling cycle apparatus 100 according to one or more embodiments, the magnetic cooling device 130 may include a magnetocaloric material 131. The magnetocaloric material 131 is a material capable of using the magnetocaloric effect. The magnetocaloric effect refers to an effect in which the magnetic moments within a magnetic material are aligned in the direction of the magnetic field and the temperature of the magnetic material changes in response to the magnetic field being applied to the magnetic material. The temperature of the magnetocaloric material 131 may be changed as the magnetic moments within the magnetocaloric material 131 align in response to the applied magnetic field.

The magnetic cooling device 130 may change the temperature of the working fluid by moving the working fluid to a space in which the magnetocaloric material 131 is disposed. In a state in which, a magnetic field is applied to the magnetocaloric material 131, the temperature of the magnetocaloric material 131 may increase, and while the temperature of the magnetocaloric material 131 increases, the working fluid may pass through the magnetocaloric material 131 so as to receive the heat from the magnetocaloric material 131. Accordingly, the temperature of the working fluid may increase.

Further, In a state in which, the magnetic field is removed after the magnetic field is applied to the magnetocaloric material 131, the temperature of the magnetocaloric material 131 may decrease, and the heat may be emitted to the working fluid. Accordingly, the temperature of the magnetocaloric material 131 may decrease further than before being exposed to the magnetic field. While the temperature of the magnetocaloric material 131 decreases, the working fluid may pass through the magnetocaloric material 131 to emit heat to the magnetocaloric material 131. Accordingly, the temperature of the working fluid may decrease.

The magnetocaloric material 131 may be provided in plurality. The plurality of magnetocaloric materials may have a bar shape or a spherical shape. The plurality of magnetocaloric materials 131 may be stacked on each other.

The plurality of magnetocaloric materials 131 may have different Curie temperatures. The magnetocaloric materials 131 having different Curie temperatures may be heated or cooled to different temperatures depending on the application or removal of the magnetic field. Accordingly, the temperature of the working fluid of the cooling cycle apparatus 100 may increase or decrease as the working fluid passes through the plurality of magnetocaloric materials 131.

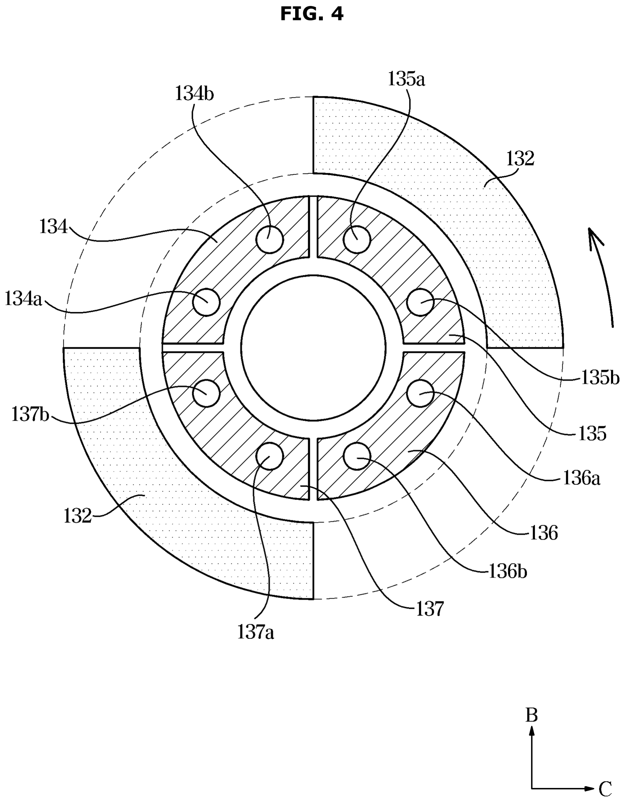

The magnetic cooling device 130 may further include a magnet 132 (refer to FIG. 4). The magnet 132 may or may not apply the magnetic field to the magnetocaloric material 131. When the magnetocaloric material 131 receives the magnetic field from the magnet 132, the temperature of the magnetocaloric material 131 may increase, and when the magnetic field is not applied, the temperature of the magnetocaloric material 131 may decrease.

The magnetic cooling device 130 may include a magnetocaloric module 130a. The magnetocaloric module 130a may include the magnetocaloric material 131 and may heat or cool the fluid passing through the magnetocaloric module 130a. According to one or more embodiments, the magnetic field may or may not be applied to the magnetocaloric module 130a through the magnet 132, and the fluid passing through the magnetocaloric module 130a may be heated or cooled accordingly. The magnetocaloric module 130a may be a magnetic cooler, a magnetic heater, a magnetic cooling module, and a magnetic heating module.

The magnetocaloric module 130a may include a case 130d forming a receiving space 130e. The magnetocaloric material 131 may be disposed within the receiving space 130e. The working fluid flowing through the magnetic cooling device 130 may pass through the receiving space 130e inside the case 130d. The working fluid flowing through the magnetocaloric module 130a may change a flow direction thereof based on the magnetic field being applied to the magnetocaloric material 131.

The magnetocaloric material 131 may be arranged in the receiving space 130e. Accordingly, the fluid flowing in the receiving space 130e may be heated while the magnetocaloric material 131 receives the magnetic field of the magnet 132. In addition, because the temperature of the magnetocaloric material 131 decreases after the magnetic field of the magnet 132 disappears, the fluid flowing in the receiving space 130e may be cooled. The receiving space 130e may be an internal flow path 130e. The internal flow path 130e may be in communication with communication flow paths 130f and 130g.

According to one or more embodiments, while the magnetocaloric material 131 receives the magnetic field of the magnet 132, the working fluid may receive heat from the second heat exchanger 120 and then may be heated by flowing to the internal flow path 130e through a first communication flow path 130f. The working fluid passing through the internal flow path 130e may flow to the auxiliary cooling device 140 through the first communication flow path 130f formed within the first pipe 161. At this time, the working fluid may flow in a first direction (e.g. -A direction) (refer to FIG. 2). The first pipe 161 may be an outlet pipe 161, and the third pipe 163 may be an inlet pipe 163.

According to one or more embodiments, while the magnetic field disappears in the magnetocaloric material 131, the working fluid may emit heat through the first heat exchanger 110 and then may be cooled by flowing to the internal flow path 130e through a second communication flow path 130g formed in the second pipe 162. The working fluid passing through the internal flow path 130e may flow to the auxiliary cooling device 140 through the second communication flow path 130g formed in the fourth pipe 164. At this time, the working fluid may flow in a second direction (e.g., +A direction) opposite to the first direction (refer to FIG. 3). The second pipe 162 may be an inlet pipe 162, and the fourth pipe 164 may be an outlet pipe 164.

The magnetic cooling device 130 may include a plurality of valves 138 and 139. The plurality of valves 138 and 139 may regulate a flow of the fluid flowing through the magnetocaloric module 130a. According to one or more embodiments, the cooling cycle apparatus 100 may operate the plurality of valves 138 and 139 to switch and change the direction in which the working fluid flows. The plurality of valves 138 and 139 may be installed on the pipes 161, 162, 163 and 164 to open and close the communication flow paths 130f and 130g. The valves 138 and 139 may be installed on the pipes 161, 162, 163 and 164 to open the communication flow paths 130f and 130g or to allow and/or initiate a movement in which the fluid flows along the communication flow paths 130f and 130g. Additionally, the valves 138 and 139 may expand, improve and/or change an area of the communication flow paths 130f and 130g through which the fluid flows.

As described later, the communication flow paths 130f and 130g may communicate with the heating flow paths 141a, 141b, 141c, and 141d and the cooling flow paths 142a, 142b, 142c, and 142d. Accordingly, the valves 138 and 139 may also open the heating flow paths 141a, 141b, 141c, and 141d and/or the cooling flow paths 142a, 142b, 142c, and 142d or allow and/or initiate a movement in which the fluid flows along the heating flow paths 141a, 141b, 141c, and 141d and/or the cooling flow paths 142a, 142b, 142c, and 142d. In addition, the valves 138 and 139 may expand, improve and/or change areas of the heating flow paths 141a, 141b, 141c, and 141d and/or the cooling flow paths 142a, 142b, 142c, and 142d through which the fluid flows.

The plurality of valves 138 and 139 may include a first valve 138 and a second valve 139. The first valve 138 may prevent the fluid, which flows from the second heat exchanger 120 to the magnetocaloric module 130a, from flowing in the second direction and allow the fluid to flow in the first direction. The first valve 138 may open and close the first communication flow path 130f. Accordingly, the first valve 138 may cause the working fluid to be heated.

The second valve 139 may prevent the fluid, which flows from the first heat exchanger 110 to the magnetocaloric module 130a, from flowing in the first direction and allow the fluid to flow in the second direction. The second valve 139 may open and close the second communication flow path 130g. Accordingly, the second valve 139 may cause the working fluid to be heated.

According to one or more embodiments, the first valve 138 and the second valve 139 may each be provided in plurality.

FIG. 4 is a schematic diagram of the magnetic cooling device in the cooling cycle apparatus according to one or more embodiments. FIG. 4 is a cross-sectional view of the magnetic cooling device shown in FIGS. 2 and 3 rotated 90 degrees.

Referring to FIG. 4, the magnetocaloric module 130a may be provided in plurality. The plurality of magnetocaloric modules 130a may include a first magnetocaloric module 134, a second magnetocaloric module 135, a third magnetocaloric module 136, and a fourth magnetocaloric module 137. The first magnetocaloric module 134, the second magnetocaloric module 135, the third magnetocaloric module 136, and the fourth magnetocaloric module 137 may be disposed adjacent to each other.

The magnetic field may not be or may be applied to the plurality of magnetocaloric modules 134, 135, 136, and 137 through the magnet 132. The magnet 132 may be arranged to surround the plurality of magnetocaloric modules 134, 135, 136, and 137.

At least one magnet 132 may be provided. According to one or more embodiments, a plurality of magnets 132 may be provided, and the magnetocaloric material 131 and the magnetocaloric modules 134, 135, 136, and 137 including the magnetocaloric material 131 may be positioned between the plurality of magnets 132. The magnet 132 may be arranged to surround the magnetocaloric modules 134, 135, 136, and 137. The magnet 132 may rotate with respect to the magnetocaloric modules 134, 135, 136, and 137. The magnet 132 may or may not apply the magnetic field to the magnetocaloric modules 134, 135, 136, and 137 as the magnet 132 rotates on the outside of the magnetocaloric modules 134, 135, 136, and 137.

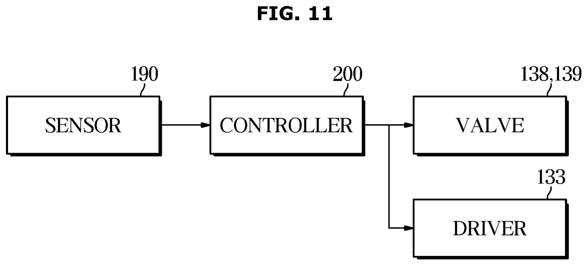

The magnetic cooling device 130 may further include a driver 133 (refer to FIG. 11). The driver 133 may transmit power to the magnet 132 to allow the magnet 132 to rotate. For example, the driver 133 may allow the magnet 132 to rotate with respect to the magnetocaloric modules 134, 135, 136, and 137 on a circumferential side of the magnetocaloric modules 134, 135, 136, and 137.

As the magnet 132 rotates, the magnetic field may or may not be applied to the magnetocaloric modules 134, 135, 136, and 137. The magnet 132 may be provided in plurality. At a specific moment, the magnet 132 may apply the magnetic field to the second magnetocaloric module 135 and the fourth magnetocaloric module 137, and may not apply the magnetic field to the first magnetocaloric module 134 and the third magnetocaloric module 136. Accordingly, the temperature of the second magnetocaloric module 135 and the fourth magnetocaloric module 137 may increase, and the working fluid may flow from the second heat exchanger 120 to the second magnetocaloric module 135 and the fourth magnetocaloric module 137. However, the application of the magnetic force of the magnet 132 is not limited thereto.

However, according to one or more embodiments, it is illustrated that the second magnetocaloric module 135 and the fourth magnetocaloric module 137 receive the magnetic field from the magnet 132. Alternatively, the first magnetocaloric module 134 and the third magnetocaloric module 136 may receive the magnetic field as the magnet 132 rotates. Additionally, the rotation direction of the magnet 132 may be clockwise or counterclockwise.

According to one or more embodiments, it is illustrated that four magnetocaloric modules are provided, but the number of magnetocaloric modules 134, 135, 136, and 137 is not limited thereto. According to one or more embodiments, the magnetocaloric module may be composed of only the first magnetocaloric module 134 and the second magnetocaloric module 135, and thus the magnetic field may be applied to the first magnetocaloric module 134 or the second magnetocaloric module 135.

Each of the plurality of magnetocaloric modules 134, 135, 136, and 137 may include the internal flow path 130e and the communication flow paths 130f and 130g. The communication flow paths 130f and 130g may be in communication with the internal flow path 130e. The plurality of magnetocaloric modules 134, 135, 136, and 137 may include a first communication flow path 130f, 134a, 135a, 136a, and 137a and a second communication flow path 130g, 134b, 135b, and 136b, 137b, respectively. The first communication flow paths 130f, 134a, 135a, 136a, and 137a and the second communication flow paths 130g, 134b, 135b, 136b, and 137b may be in communication with the receiving space 130e. The working fluid may flow from the second heat exchanger 120 to the receiving space 130e, in which the magnetocaloric material 131 is disposed, through the first communication flow paths 130f, 134a, 135a, 136a, and 137a, and then flow to a heater 141 of the auxiliary cooling device 140. In addition, the working fluid may flow from first heat exchanger 110 to the receiving space 130e, in which the magnetocaloric material 131 is disposed, through the second communication flow paths 130g, 134b, 135b, 136b, and 137b, and then flow to a cooler 142 of the auxiliary cooling device 140.

The first valve 138 and the second valve 139 may be provided in plurality, respectively. The first valve 138 and the second valve 139 may open and close the first communication flow paths 130f, 134a, 135a, 136a, and 137a and the second communication flow paths 130g, 134b, 135b, 136b, and 137b. According to one or more embodiments, the first valve 138 may open and close the first communication flow paths 130f, 134a, 135a, 136a, and 137a, and the second valve 139 may open and close the second communication flow paths 130g, 134b, 135b, 136b, and 137b.

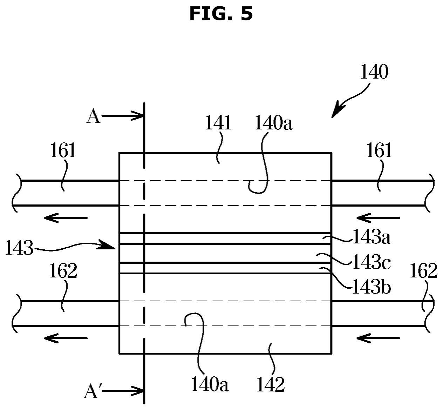

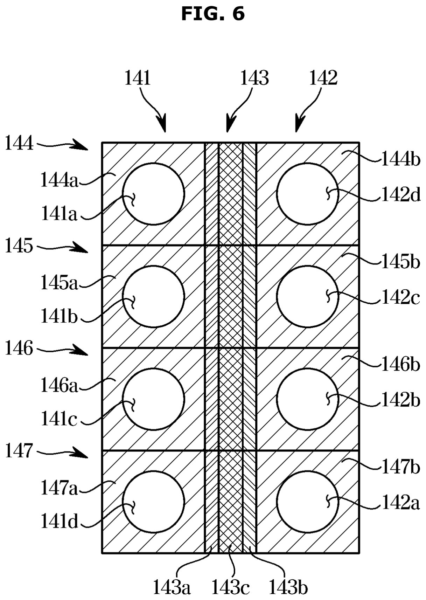

FIG. 5 is a schematic diagram of an auxiliary cooling device in the cooling cycle apparatus according to one or more embodiments. FIG. 6 is a schematic diagram of the auxiliary cooling device in the cooling cycle apparatus according to one or more embodiments. FIG. 6 is a cross-sectional view taken along a line A-A' of the auxiliary cooling device of FIG. 5.

Referring to FIGS. 5 and 6, the auxiliary cooling device 140 may include the heater 141 and the cooler 142. The heater 141 may additionally heat the fluid that is heated from the magnetic cooling device 130 and flows into the first heat exchanger 110. The cooler 142 may additionally cool the fluid that is cooled from the magnetic cooling device 130 and flows into the second heat exchanger 120.

The heater 141 may include a fin. The fin 141 of the heater 141 may extend perpendicular to a direction in which a first plate 143a of a thermoelectric element 143 extends. Additionally, the first pipe 161 may penetrate the heater 141 provided with the fin 141.

The cooler 142 may include a fin. The fin 142 of the cooler 142 may extend perpendicular to a direction in which a second plate 143b of the thermoelectric element 143 extends. Additionally, the second pipe 162 may penetrate the cooler 142 provided with the fin 142.

A through-hole 140a may be formed in the fin 141 and 142, and the pipes 161 and 162 may be inserted into the through-hole 140a. However, the shapes of the heater 141 and the cooler 142 are not limited to the above-described fins, and the heater 141 and the cooler 142 may include various shapes.

The working fluid passing through the auxiliary cooling device 140 may flow to the magnetic cooling device 130, the first heat exchanger 110, and the second heat exchanger 120 through the pipes 161 and 162. The first pipe 161 may allow the working fluid to flow from the magnetic cooling device 130 to the heater 141 of the auxiliary cooling device 140, and to flow from the heater 141 to the first heat exchanger 110. The second pipe 162 may allow the working fluid to flow from the magnetic cooling device 130 to the cooler 142 of the auxiliary cooling device 140, and to flow from the cooler 142 to the second heat exchanger 120.

The plurality of pipes 161 and 162 may penetrate and be inserted into the heater 141 and the cooler 142 of the auxiliary cooling device 140. The heating flow paths 141a, 141b, 141c, and 141d may be formed in a portion of the first pipe 161 penetrating the heater 141. The cooling flow paths 142a, 142b, 142c, and 142d may be formed in a portion of the second pipe 162 penetrating the cooler 142.

The first pipe 161 and the second pipe 162 may be provided in plurality, respectively. The plurality of first pipes 161 may be provided to correspond to the heating flow paths 141a, 141b, 141c, and 141d. The plurality of second pipes 162 may be provided to correspond to the cooling flow paths 142a, 142b, 142c, and 142d.

The first pipe 161 and the second pipe 162 may be formed integrally so as to be a single pipe. Alternatively, the first pipe 161 may be formed as a plurality of pipes is connected or the second pipe 162 may be formed as a plurality of pipes is connected.

The auxiliary cooling device 140 may include a plurality of auxiliary coolers 144, 145, 146, and 147. The plurality of auxiliary coolers 144, 145, 146, and 147 may include a first auxiliary cooler 144, a second auxiliary cooler 145, a third auxiliary cooler 146, and a fourth auxiliary cooler 147. The first auxiliary cooler 144, the second auxiliary cooler 145, the third auxiliary cooler 146, and the fourth auxiliary cooler 147 may be disposed adjacent to each other. The number of auxiliary coolers 144, 145, 146, and 147 may be provided to correspond to the number of magnetocaloric modules. According to one or more embodiments, four auxiliary coolers 144, 145, 146, and 147 may be provided, but the number of auxiliary coolers 144, 145, 146, and 147 is not limited thereto. The plurality of auxiliary coolers 144, 145, 146, and 147 may include heaters 144a, 145a, 146a, and 147a and coolers 144b, 145b, 146b, and 147b, respectively.

The heaters 144a, 145a, 146a, and 147a and the coolers 144b, 145b, 146b, and 147b may be formed in a portion of the auxiliary cooling device 140 through which the pipes 161 and 162 pass. The heating flow paths 141a, 141b, 141c, and 141d may be formed in a region, through which the first pipe 161 passes, in the heater 141, and the cooling flow paths 142a, 142b, 142c, and 142d may be formed in a region, through which the second pipe 162 passes, in the cooler 142. The heating flow paths 141a, 141b, 141c, and 141d may penetrate the heater 141, and the cooling flow paths 142a, 142b, 142c, and 142d may penetrate the cooler 142. However, the heaters 144a, 145a, 146a, and 147a and the coolers 144b, 145b, 146b, and 147b may be formed inside the heater 141 and the cooler 142, not inside the pipes 161 and 162.

The heaters 144a, 145a, 146a, and 147a and the coolers 144b, 145b, 146b, and 147b may be connected to and communicate with the communication flow paths 130f and 130g.

The working fluid may pass through the heater 141 through the heating flow paths 141a, 141b, 141c, and 141d before flowing from the magnetic cooling device 130 to the first heat exchanger 110. Additionally, the working fluid may pass through the cooler 142 through the cooling flow paths 142a, 142b, 142c, and 142d before flowing from the magnetic cooling device 130 to the second heat exchanger 120.

A first heating flow path 141a may be formed in the heater 144a of the first auxiliary cooler 144, a second heating flow path 141b may be formed in the heater 145a of the second auxiliary cooler 145, a third heating flow path 141c may be formed in the heater 146a of the third auxiliary cooler 146, and a fourth heating flow path 141d may be formed in the heater 147a of the fourth auxiliary cooler 147.

A first cooling flow path 142d may be formed in the cooler 144b of the first auxiliary cooler 144, a second cooling flow path 142c may be formed in the cooler 145b of the second auxiliary cooler 145, a third cooling flow path 142b may be formed in the cooler 146b of the third auxiliary cooler 146, and a fourth cooling flow path 142a may be formed in the cooler 147b of the fourth auxiliary cooler 147.

Accordingly, the working fluid may flow through each of the plurality of auxiliary coolers 144, 145, 146, and 147. The working fluid flowing through the cooling cycle apparatus 100 may be a liquid, and thus the liquid may flow along the heating flow paths 141a, 141b, 141c, and 141d and the cooling flow paths 142a, 142b, 142c, and 142d passing through the heater 141 and the cooler 142 of the auxiliary cooling device 140.

The auxiliary cooling device 140 may further include the thermoelectric element 143. The thermoelectric element 143 may allow the heater 141 to be hot and the cooler 142 to be cold. The heater may be disposed on one side of the thermoelectric element 143, and the cooler may be disposed on the other side of the thermoelectric element 143. The thermoelectric element 143 may be disposed between the heater 141 and the cooler 142. The thermoelectric element 143 may be in contact with the heater 141 and the cooler 142. However, the location of the thermoelectric element 143 is not limited thereto. The thermoelectric element 143 may be arranged to be spaced apart from the heater 141 and the cooler 142.

The thermoelectric element 143 may include the first plate 143a, the second plate 143b, and a semiconductor layer 143c.

The semiconductor layer 143c may be disposed between the first plate 143a and the second plate 143b. The semiconductor layer 143c may include a plurality of thermoelectric materials connected in series, such as, a plurality of p-type and n-type semiconductors connected in series. The semiconductor layer 143c may allow the temperatures of the first plate 143a and the second plate 143b to change.

The first plate 143a and the second plate 143b may include a ceramic plate and a metal plate. The metal plate may be in contact with a thermoelectric material provided in the semiconductor layer 143c. One side of the ceramic plate may be in contact with the metal plate and the other side of the ceramic plate may be in contact with the heater 141 and/or the cooler 142.

A power terminal may be connected to both ends of the thermoelectric element 143. The power terminal may allow a current to flow to the thermoelectric element 143. The semiconductor layer 143c may receive a current to allow the temperature of the first plate 143a to increase and to allow the temperature of the second plate 143b to decrease. The thermoelectric element 143 may be a temperature controller 143.

The first plate 143a may be in contact with the heater 141, and the second plate 143b may be in contact with the cooler 142. The first plate 143a may transfer heat to the heater 141 to increase the temperature of the heater 141, and the second plate 143b may remove heat from the cooler 142 and lower the temperature of the cooler 142. The first plate 143a may be a heating plate 143a, and the second plate 143b may be a cooling plate 143b. However, the heating plate 143a may be a second plate 143a, and the cooling plate 143b may be a first plate 143b.

The thermoelectric element 143 may receive power (or electrical energy), and may regulate the temperature of the heater 141 and the cooler 142 according to an amount of supplied power. As the amount of power supplied to the thermoelectric element 143 increases, a temperature difference between the first plate 143a and the second plate 143b may increase. Accordingly, because the heater 141 becomes hotter and the cooler 142 becomes colder, the temperature difference between the heater 141 and the cooler 142 may increase.

The auxiliary cooling device 140 may be a thermoelectric module. Alternatively, the auxiliary cooling device 140 may be an auxiliary heating device, a thermoelectric cooling device, or a thermoelectric heating device.

The thermoelectric element may include at least one pair of N-type and P-type semiconductor layers capable of cooling and/or heating by the Peltier effect. The Peltier effect refers to a phenomenon in which heat emission or heat absorption, different from Joule heat, occurs when a current is applied across different solids or semiconductors. The thermoelectric element may use the air-cooling method or the water-cooling method.

In the conventional thermoelectric element, only one of the heater and the cooler is used, rather than the heater and the cooler being used simultaneously. In a state in which only the heater is used, a separate device such as a fan is needed to quickly process the heat absorbed by the cooler formed on a side different from the heater. Additionally, when only the cooler is used, a separate device is needed to process the heat emitted from the heater formed on a side different from the cooler.

According to one or more embodiments, the heater 141 and the cooler 142 of the auxiliary cooling device 140 may be used simultaneously, and thus a separate device, such as a fan, for processing heat is not needed. By transferring heat to the fluid passing through the heating flow paths 141a, 141b, 141c, and 141d, a device for processing the heat emitted from the heater 141 is not required. By receiving heat from the fluid passing through the cooling flow paths 142a, 142b, 142c and 142d, a device for processing heat that is supposed to be absorbed in the cooler 142 is not required.

In addition, in the conventional thermoelectric element, at least one of the cooler and the heater exchanges heat with gas, but the heater 141 and the cooler 142 of the auxiliary cooling device 140 according to one or more embodiments may exchange heat with a liquid. Because the liquid has a higher heat transfer coefficient than the gas, the auxiliary cooling device 140 according to one or more embodiments may have higher heat transfer efficiency with respect to the same heat exchange area, than the conventional thermoelectric element.

Therefore, the auxiliary cooling device 140 according to one or more embodiments may not require a separate device for heat emission in the heater 141 or heat absorption in the cooler 141, and the heat transfer efficiency may be superior to that of the conventional thermoelectric element. Therefore, it is possible to reduce the material cost of the cooling cycle apparatus 100 and at the same time, the energy efficiency may be increased compared to the conventional one.

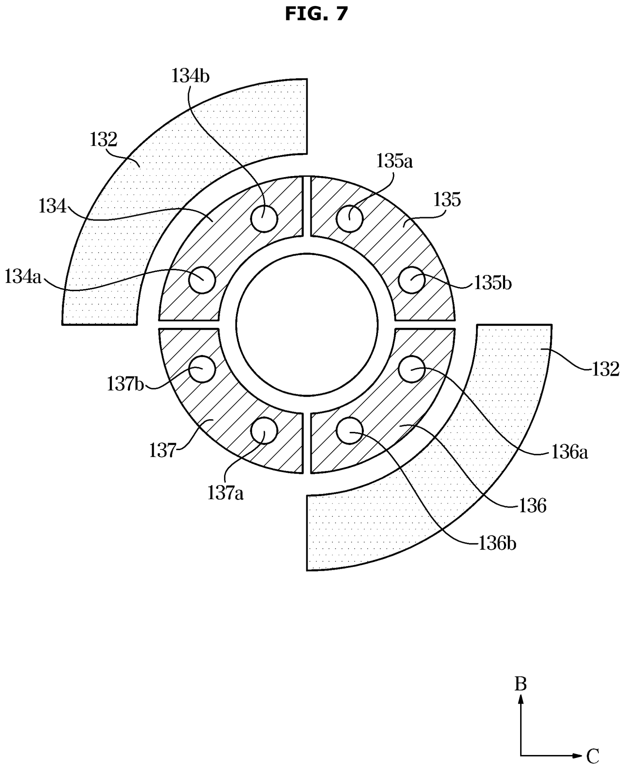

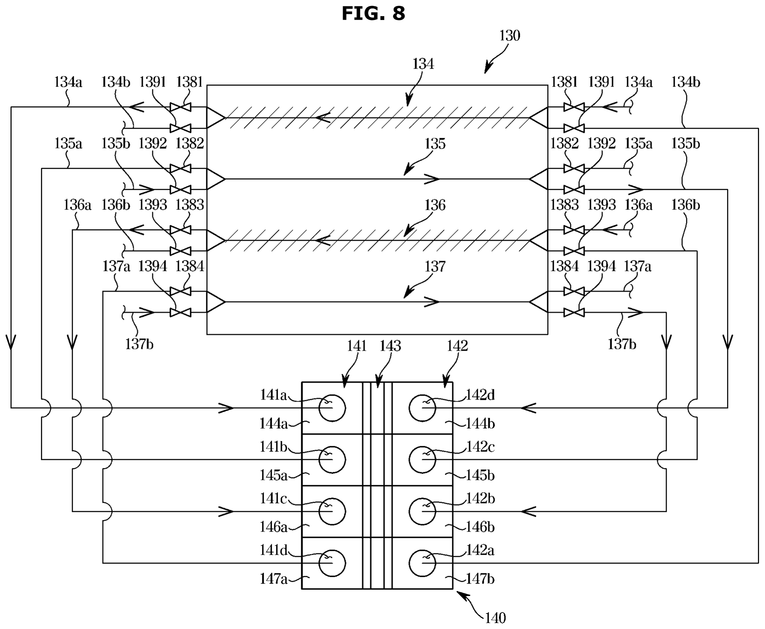

FIG. 7 is a schematic diagram of the magnetic cooling device in the cooling cycle apparatus according to one or more embodiments. FIG. 8 is a flow diagram of a working fluid in the cooling cycle apparatus according to one or more embodiments.

Referring to FIGS. 7 and 8, the magnet 132 may be rotatable with respect to the plurality of magnetocaloric modules 134, 135, 136, and 137, and the magnetic field may or may not be applied to the magnetocaloric modules 134, 135, 136, and 137 based on the position of the magnet 132.

For example, based on the magnet 132 being disposed adjacent to the first magnetocaloric module 134 and the third magnetocaloric module 136, the magnetic field may be applied to the first magnetocaloric module 134 and the third magnetocaloric module 136 and the magnetic field may not be applied to the second magnetocaloric module 135 and the fourth magnetocaloric module 137.

At this time, the fluid may flow in the first direction in the first magnetocaloric module 134 and the third magnetocaloric module 136 (refer to FIG. 2), and the fluid may flow in the second direction in the second magnetocaloric module 135 and the fourth magnetocaloric module 137 (refer to FIG. 3).

A method in which the fluid flows in the first magnetocaloric module 134 and a method in which the fluid flows in the third magnetocaloric module 136 are the same, and a method in which the fluid flows in the second magnetocaloric module 135 and a method in which the fluid flows in the fourth magnetocaloric module 137 are the same. Therefore, the description below will be based on the first magnetocaloric module 134 and the second magnetocaloric module 135.

While the magnetic field is applied to the first magnetocaloric module 134, the fluid receiving heat from the second heat exchanger 120 may flow to the first magnetocaloric module 134 through the first communication flow paths 130f and 134a. The fluid flowing into the first magnetocaloric module 134 may receive heat from the magnetocaloric material 131 within the first magnetocaloric module 134. The fluid receiving heat from the magnetocaloric material 131 in the first magnetocaloric module 134 may flow to the first heating flow path 141a, which penetrates the heater 144a, through the first communication flow paths 130f and 134a. The fluid passing through the first heating flow path 141a may receive heat from the heater 144a. Accordingly, the fluid passing through the first heating flow path 141a may have a higher temperature.

In addition, while the magnetic field is applied to the first magnetocaloric module 134, the fluid emitting heat from the first heat exchanger 110 may flow into the second magnetocaloric module 135 through the second communication flow paths 130g and 135b. The fluid flowing into the second magnetocaloric module 135 may emit heat to the magnetocaloric material 131 within the second magnetocaloric module 135. The fluid emitting heat to the magnetocaloric material 131 of the second magnetocaloric module 135 may flow into the first cooling flow path 142d, which penetrates the cooler 144b, through the second communication flow paths 130g and 135b. The fluid passing through the first cooling flow path 142d may emit heat to the cooler 144b. Accordingly, the fluid passing through the first cooling flow path 142d may have a lower temperature.

The fluid passing through the first magnetocaloric module 134 and the heater 144a, and the fluid passing through the second magnetocaloric module 135 and the cooler 144b may simultaneously flow through the auxiliary cooling device 140. The fluid passing through the first heating flow path 141a and the fluid passing through the first cooling flow path 142d may flow simultaneously. As the fluid passing through the first heating flow path 141a and the fluid passing through the first cooling flow path 142d flow simultaneously, the heater 144a and the cooler 144b of the first auxiliary cooler 144 may be used simultaneously. The magnetic cooling device 130 may include the valves 138 and 139 installed on the pipes 161 and 162 to regulate the flow of the fluid flowing to the plurality of magnetocaloric modules 144, 145, 146 and 147, and the working fluid may flow from the magnetic cooling device 130 to the auxiliary cooling device 140 through the pipes 161 and 162. Accordingly, when the valves 138 and 139 installed on the pipes 161 and 162 operate, a direction, in which the fluid flows in the magnetocaloric modules 144, 145, 146, and 147, may be changed.

According to one or more embodiments, a first valve 1381, which is provided on a side of the first magnetocaloric module 134 to control the direction of the fluid flowing into the first magnetocaloric module 134 receiving the magnetic field of the magnet 132, may open the first communication flow path 134a. A second valve 1391 provided on the side of the first magnetocaloric module 134 may close the second communication flow path 134b. Accordingly, the working fluid may be heated by passing through the first magnetocaloric module 134, and the heated working fluid may flow to the heater 141.

On the contrary, a first valve 1382, which is provided on a side of the second magnetocaloric module 135 to control the direction of the fluid flowing into the second magnetocaloric module 135 that is not receiving the magnetic field of the magnet 132, may close the first communication flow path 135a. A second valve 1392 provided on the side of the second magnetocaloric module 135 may open the second communication flow path 135b. Accordingly, the working fluid may be cooled by passing through the second magnetocaloric module 135, and the cooled working fluid may flow to the cooler 142.

Finally, based on the magnetic field being applied to the first magnetocaloric module 134 and not applied to the second magnetocaloric module 135, the first valves 1381 and 1382 and the second valves 1391 and 1392 may be controlled, and as the fluid passing through the heater 144a of the first auxiliary cooler 144 and the fluid passing through the cooler 144b of the first auxiliary cooler 144 flow simultaneously, the heater 144a and the cooler 144b of the first auxiliary cooler 144 may be used simultaneously.

Accordingly, the cooling cycle apparatus 100 according to one or more embodiments may simultaneously heat and cool the fluid by using a single auxiliary cooling device 140, thereby increasing the energy efficiency. Additionally, because a separate device, such as a fan, configured to process heat generated by the heater 144a or heat absorbed by the cooler 144b, may be not required, and thus production and operating costs may be reduced.

The third magnetocaloric module 136 may be operated in the same manner as the first magnetocaloric module 134. The fluid passing through the third magnetocaloric module 136 may pass through the first communication flow path 136a opened by a first valve 1383, and flow to the third heating flow path 141c penetrating the heater 146a. Additionally, the fourth magnetocaloric module 137 may be operated in the same manner as the second magnetocaloric module 135. The fluid passing through the fourth magnetocaloric module 137 may pass through the second communication flow path 137b opened by a second valve 1394 and flow to the third cooling flow path 142b penetrating the cooler 146b.

Finally, the fluid passing through the heater 146a of the third auxiliary cooler 146 and the fluid passing through the cooler 146b of the third auxiliary cooler 146 may flow simultaneously, and thus the heater 146a and the cooler 146b of the third auxiliary cooler 146 may be used simultaneously.

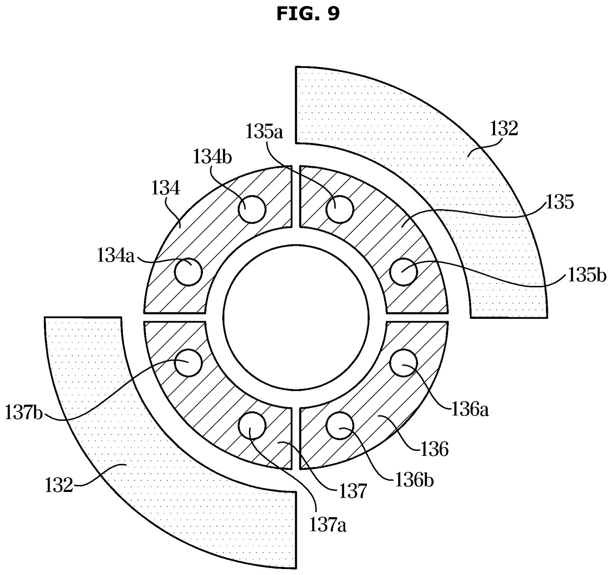

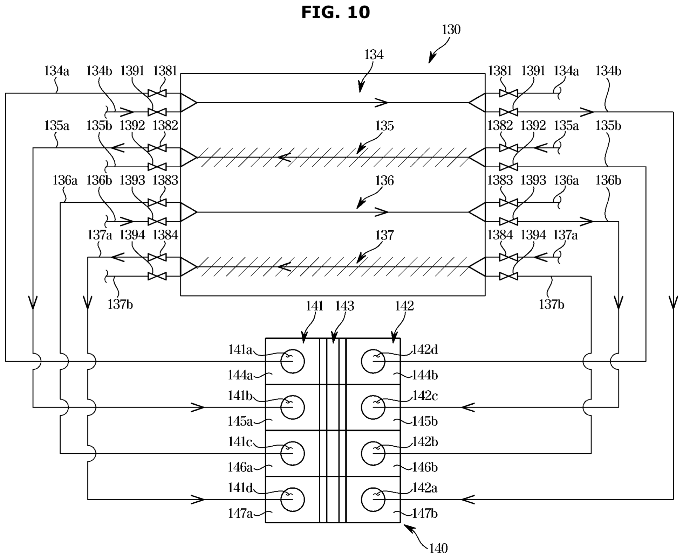

FIG. 9 is a schematic diagram of the magnetic cooling device in the cooling cycle apparatus according to one or more embodiments. FIG. 10 is a flow diagram of a working fluid in the cooling cycle apparatus according to one or more embodiments.

Referring to FIGS. 9 and 10, based on the magnet 132 being disposed adjacent to the second magnetocaloric module 135 and the fourth magnetocaloric module 137, the magnetic field may be applied to the second magnetocaloric module 135 and the fourth magnetocaloric module 137, and the magnetic field may not be applied to the first magnetocaloric module 134 and the third magnetocaloric module 136.

At this time, the fluid may flow in the first direction in the second magnetocaloric module 135 and the fourth magnetocaloric module 137 (refer to FIG. 2), and the fluid may flow in the second direction in the first magnetocaloric module 134 and the third magnetocaloric module 136 (refer to FIG. 3).

Hereinafter the description will be described with reference to the second magnetocaloric module 135 and the third magnetocaloric module 136.

While the magnetic field is applied to the second magnetocaloric module 135, the fluid receiving heat from the second heat exchanger 120 may flow to the second magnetocaloric module 135 through the first communication flow paths 130f and 134a. The fluid flowing into the second magnetocaloric module 135 may receive heat from the magnetocaloric material 131 within the second magnetocaloric module 135. The fluid receiving heat from the magnetocaloric material 131 in the second magnetocaloric module 135 may pass through the second heating flow path 141b through the first communication flow paths 130f and 135a. The fluid passing through the second heating flow path 141b may receive heat from the heater 145a. Accordingly, the fluid passing through the second heating flow path 141b may have a higher temperature.

In addition, while the magnetic field is applied to the second magnetocaloric module 135, the fluid emitting heat from the first heat exchanger 110 may flow into the third magnetocaloric module 136 through the second communication flow paths 130g and 135b. The fluid flowing into the third magnetocaloric module 136 may emit heat to the magnetocaloric material 131 within the third magnetocaloric module 136. The fluid emitting heat to the magnetocaloric material 131 of the third magnetocaloric module 136 may pass through the second cooling flow path 142c through the second communication flow paths 130g and 136b. The fluid passing through the second cooling flow path 142c may emit heat to the cooler 145b. Accordingly, the fluid passing through the second cooling flow path 142c may have a lower temperature.

The fluid passing through the second magnetocaloric module 135 and the heater 145a, and the fluid passing through the first magnetocaloric module 134 and the cooler 145b may simultaneously pass through the auxiliary cooling device 140. The fluid passing through the second heating flow path 141b and the fluid passing through the second cooling flow path 142c may flow simultaneously. As the fluid passing through the second heating flow path 141b and the fluid passing through the second cooling flow path 142c flow simultaneously, the heater 145a and the cooler 145b of the second auxiliary cooler 145 may be used simultaneously.

The first valve 1382, which is provided on the side of the second magnetocaloric module 135 to control the direction of the fluid flowing into the second magnetocaloric module 135 receiving the magnetic field of the magnet 132, may open the first communication flow path 135a. The second valve 1392 provided on the side of the second magnetocaloric module 135 may close the second communication flow path 135b. Accordingly, the working fluid may be heated by passing through the second magnetocaloric module 135, and the heated working fluid may flow to the heater 145a.

On the contrary, the first valve 1383, which is provided on a side of the third magnetocaloric module 136 to control the direction of the fluid flowing into the third magnetocaloric module 136 that is not receiving the magnetic field of the magnet 132, may close the first communication flow path 136a. A second valve 1393 provided on the side of the third magnetocaloric module 136 may open the second communication flow path 135b. Accordingly, the working fluid may be cooled by passing through the third magnetocaloric module 136, and the cooled working fluid may flow to the cooler 145b.

Finally, based on the magnetic field being applied to the second magnetocaloric module 135 and not applied to the third magnetocaloric module 136, the first valves 1382 and 1383 and the second valves 1392 and 1393 may be controlled, and as the fluid passing through the heater 145a of the second auxiliary cooler 145 and the fluid passing through the cooler 145b of the second auxiliary cooler 145 flow simultaneously, the heater 145a and the cooler 145b of the second auxiliary cooler 145 may be used simultaneously.

Accordingly, the cooling cycle apparatus 100 according to one or more embodiments may simultaneously heat and cool the fluid by using a single auxiliary cooling device 140, thereby increasing the energy efficiency. Additionally, because a separate device, such as a fan, configured to process heat generated by the heater 145a or heat absorbed by the cooler 145b, may be not required, and thus production and operating costs may be reduced.

The fourth magnetocaloric module 137 may be operated in the same manner as the second magnetocaloric module 135. The fluid passing through the fourth magnetocaloric module 137 may pass through the first communication flow path 137a opened by a first valve 1384, and flow to the fourth heating flow path 141d penetrating the heater 147a. Additionally, the first magnetocaloric module 134 may be operated in the same manner as the third magnetocaloric module 136. The fluid passing through the first magnetocaloric module 134 may pass through the second communication flow path 134b opened by the second valve 1391 and flow to the fourth cooling flow path 142a penetrating the cooler 147b.

Finally, the fluid passing through the heater 147a of the fourth auxiliary cooler 147 and the fluid passing through the cooler 147b of the fourth auxiliary cooler 147 may flow simultaneously, and thus the heater 147a and the cooler 147b of the fourth auxiliary cooler 147 may be used simultaneously.

FIG. 11 is a control diagram of the cooling cycle apparatus according to one or more embodiments.

Referring to FIG. 11, the cooling cycle apparatus according to one or more embodiments may further include a controller. The controller 200 may include hardware such as a CPU, Micom, or memory, and software such as a control program. The controller 200 may include at least one memory 220 configured to store an algorithm and program-type data for controlling the operation of components in the cooling cycle apparatus, and at least one processor 210 configured to perform the above-mentioned operation by using the data stored in the at least one memory. The memory 220 and the processor 210 may each be implemented as separate chips. The processor 210 may include one or two or more processor chips or may include one or two or more processing cores. The memory 220 may include one or two or more memory chips or one or two or more memory blocks. Alternatively, the memory 220 and the processor 210 may be implemented as a single chip.

The cooling cycle apparatus 100 may further include the driver 133. The driver 133 may further include a motor and a bearing. The driver 133 may rotate the magnet 132.

The cooling cycle apparatus 100 may further include a sensor 190. The sensor 190 may sense a position of the magnet 132 and transmit information about the position of the magnet 132 to the controller 200.

The controller 200 may control the valves 138 and 139. The controller 200 may determine a position of the magnet 132 based on a value of the sensor 190. The controller 200 may control the valves 138 and 139 to change the fluid flow direction in the plurality of magnetocaloric modules 134, 135, 136, and 137, based on the determined position of the magnet 132. The controller 200 may control an operating timing of the valves 138 and 139 based on the position of the magnet 132. However, the controller 200 may control the magnet 132 and the valves 138 and 139 based on a preset rotation speed of the magnet 132 and a preset control timing value of the valves 138 and 139.

According to one or more embodiments, referring to FIGS. 7 and 8, based on the magnet 132 being at a position in which the magnet 132 applies the magnetic field to the first magnetocaloric module 134 and does not apply the magnetic field to the second magnetocaloric module 135, the controller 200 may control the first valve 1381 and the second valve 1391 to allow the first valve 1381 to open the first communication flow path 134a and to allow the second valve 1391 to close the second communication flow path 134b, so as to allow the working fluid to flow in the first direction in the first magnetocaloric module 134. Further, the controller 200 may control the first valve 1382 and the second valve 1392 to allow the first valve 1382 to close the first communication flow path 135a and to allow the second valve 1392 to open the second communication flow path 135b, so as to allow the working fluid to flow in the second direction in the second magnetocaloric module 135. Therefore, while the working fluid, which passes through the first magnetocaloric module 134 to which the magnetic field is applied by the magnet 132, passes through the heater 144a of the first auxiliary cooler 144, it is possible to allow the working fluid, which passes through the second magnetocaloric module 135 to which magnetic field is not applied, to pass through the cooler 144b of the first auxiliary cooler 144.

According to one or more embodiments, referring to FIGS. 9 and 10, based on the magnet 132 being at a position in which the magnet 132 applies the magnetic field to the second magnetocaloric module 135 and does not apply the magnetic field to the third magnetocaloric module 136, the controller 200 may control the first valve 1382 and the second valve 1392 to allow the first valve 1382 to open the first communication flow path 135a and to allow the second valve 1392 to close the second communication flow path 135b, so as to allow the working fluid to flow in the first direction in the second magnetocaloric module 135. Further, the controller 200 may control the first valve 1383 and the second valve 1393 to allow the first valve 1383 to close the first communication flow path 136a and to allow the second valve 1393 to open the second communication flow path 136b, so as to allow the working fluid to flow in the second direction in the third magnetocaloric module 136. Therefore, while the working fluid, which passes through the second magnetocaloric module 135 to which the magnetic field is applied by the magnet 132, passes through the heater 145a of the second auxiliary cooler 145, it is possible to allow the working fluid, which passes through the third magnetocaloric module 136 to which the magnetic field is not applied, to pass through the cooler 145b of the second auxiliary cooler 145.

In addition, the controller 200 may control the first valves 1383 and 1384 and the second valves 1393 and 1394 so as to allow the fluid, which passes through the first magnetocaloric module 134 and the fluid, which passes through the third magnetocaloric module 136, to flow in the same manner, and so as to allow the fluid, which passes through the second magnetocaloric module 135 and the fluid, which passes through the fourth magnetocaloric module 137, to flow in the same manner.

The controller 200 may control the driver 133 to rotate or stop the magnet 132 or regulate the rotation speed of the magnet 132. Additionally, the controller 200 may control the valves 138 and 139 according to the rotation speed of the magnet 132.

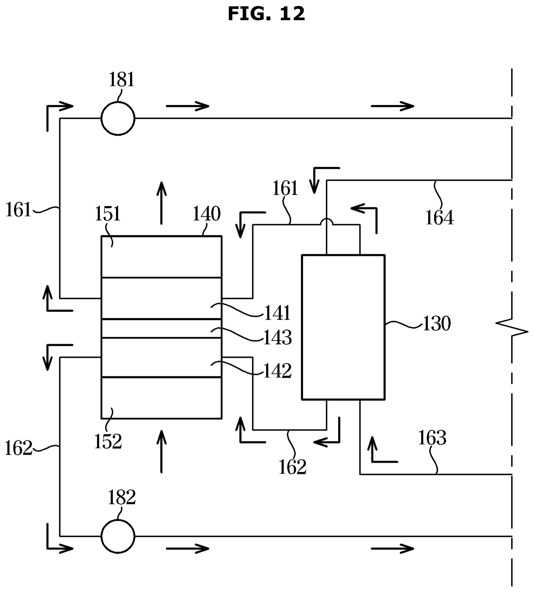

FIG. 12 is a schematic diagram of a cooling cycle apparatus according to one or more embodiments.

Referring to FIG. 12, in a cooling cycle apparatus according to one or more embodiments, a first tank 151 may store the fluid heated from the heater 141, and the fluid in the first tank 151 may be in contact with the heater 141. A second tank 152 may store the fluid cooled from the cooler 142, and the fluid in the second tank 152 may be in contact with the cooler 142.

According to one or more embodiments, the fluid in the first tank 151 may be in contact with the fin of the heater 141. Additionally, the fluid in the second tank 152 may be in contact with the fin of the cooler 142.

Alternatively, the first plate 143a of the thermoelectric element 143 may be one wall forming the first tank 151, or the second plate 143b of the thermoelectric element 143 may be one wall forming the second tank 152.

Therefore, the first tank 151 and the second tank 152 may be located together with the auxiliary cooling device 140 without being located in different locations, and thus the space utilization of the cooling cycle apparatus 100 may be increased.

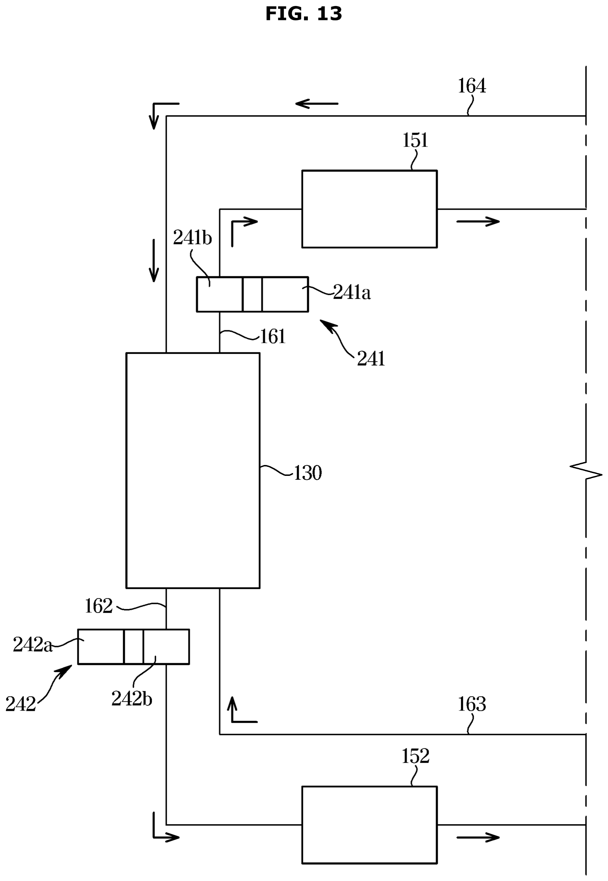

FIG. 13 is a schematic diagram of a cooling cycle apparatus according to one or more embodiments.

Referring to FIG. 13, a cooling cycle apparatus 100 may include an auxiliary heating device 241. The auxiliary heating device 241 may be a device that additionally heats the fluid passing through the magnetic cooling device 130. The auxiliary heating device 241 may be disposed downstream of the magnetic cooling device 130 and upstream of the first tank 151, and the fluid heated in the magnetic cooling device 130 may flow to the auxiliary heating device 241. The auxiliary heating device 241 may additionally heat the fluid, which flows to the first heat exchanger 110 through the magnetic cooling device 130, so as to assist in the heating of the magnetic cooling device 130.

The auxiliary heating device 241 may include a first heat exchange portion 241a. The first heat exchange portion 241a may absorb heat from the outside of the auxiliary heating device 241. The first heat exchange portion 241a may absorb heat from gas outside the auxiliary heating device 241.

The auxiliary heating device 241 may further include a second heat exchange portion 241b. The second heat exchange portion 241b may emit heat to the fluid flowing from the magnetic cooling device 130 to the first heat exchanger 110. Accordingly, the working fluid passing through the second heat exchange portion 241b may be heated.

The cooling cycle apparatus 100 may further include an auxiliary cooling device 242. The auxiliary cooling device 242 may be a device that additionally cools the fluid passing through the magnetic cooling device 130. The auxiliary cooling device 242 may be disposed downstream of the magnetic cooling device 130 and upstream of the second tank 152, and the fluid cooled in the magnetic cooling device 130 may flow to the auxiliary cooling device 242. The auxiliary cooling device 242 may additionally cool the fluid, which flows to the second heat exchanger 120 through the magnetic cooling device 130, so as to assist in the cooling of the magnetic cooling device 130.

The auxiliary cooling device 242 may include a first heat exchange portion 242a. The first heat exchange portion 242a may emit heat to the outside of the auxiliary cooling device 242. The first heat exchange portion 242a may emit heat to gas outside of the auxiliary cooling device 242.

The auxiliary cooling device 242 may further include a second heat exchange portion 242b. The second heat exchange portion 242b may absorb heat from the fluid flowing from the magnetic cooling device 130 to the second heat exchanger 120. Accordingly, the working fluid passing through the second heat exchange portion 242b may be cooled.

Finally, due to the auxiliary heating device 241 and the auxiliary cooling device 242, the fluid flowing into the first heat exchanger 110 may be further heated, and the fluid flowing into the second heat exchanger 120 may be further cooled. Accordingly, the efficiency of the heat exchange may be increased in the first heat exchanger 110 and the second heat exchanger 120. Additionally, because the fluid flowing into the second heat exchanger 120 may have a very low temperature, a space to be cooled may have a lower temperature.

According to one or more embodiments, the auxiliary heating device 241 and/or the auxiliary cooling device 242 may include a thermoelectric device. However, the auxiliary heating device 241 and/or the auxiliary cooling device 242 are not limited to the thermoelectric device. The auxiliary heating device 241 and/or the auxiliary cooling device 242 may include a vapor cooling device, a cooling cycle apparatus using a refrigerant, an air-cooling device using a fan, a water-cooling method using cooling water, etc.

In the cooling cycle apparatus 100, at least one of the auxiliary heating device 241 and the auxiliary cooling device 242 may be used. According to one or more embodiments, in the cooling cycle apparatus 100, only the auxiliary heating device 241 may be used, or only the auxiliary cooling device 242 may be used.

FIG. 14 is a perspective view of an appliance including the cooling cycle apparatus according to one or more embodiments. In FIG. 14, a refrigerator 1a is described as an example of the appliance 1.

Referring to FIG. 14, the refrigerator 1a according to one or more embodiments may include a main body 10a, storage compartments 20a and 30a formed inside the main body 10a, and doors 21a, 22a, and 31a configured to open and close the storage compartments 20a and 30a.

The main body 10a may include an inner case 11a forming the storage compartments 20a and 30a, an outer case 12a coupled to the outside of the inner case 11a, and an insulation material arranged between the inner case 11a and the outer case 12a.

The inner case 11a may be formed by injection molding from a plastic material, and the outer case 12a may be formed of a metal material. Urethane foam insulation material may be used as the insulation material and, if necessary, vacuum insulation may be used together.

The urethane foam insulation material may be formed by coupling the inner case 11a and the outer case 12a and then by filling a space therebetween with foamed urethane in which urethane is mixed with a foaming agent. The foamed urethane has strong adhesion so as to strengthen a bonding force between the inner case 11a and the outer case 12a. When foaming is completed, the foamed urethane may have sufficient strength.

The main body 10a may include an intermediate wall 13a provided to divide the storage compartments 20a and 30a into an upper part and a lower part. The intermediate wall 13a may define a refrigerating compartment 20a and a freezing compartment 30a.

Meanwhile, the partition of the storage compartments 20a and 30a is not limited thereto and may be implemented in various known shapes.

The storage compartments 20a and 30a may include the refrigerating compartment 20a formed in the upper part of the main body 10a and the freezing compartment 30a formed in the lower part of the main body 10a. The freezing compartment 30a may be provided below the refrigerating compartment 20a.

The refrigerating compartment 20a may be maintained at approximately 0 to 5 degrees Celsius, thereby allowing food to be refrigerated. The freezing compartment 30a may be maintained at approximately -30 to 0 degrees Celsius, thereby allowing food to be frozen.

The refrigerating compartment 20a may be provided with a shelf 23a on which food is placed and a storage container 24a in which food is stored.

The refrigerating compartment 20a and the freezing compartment 20a may each include an open front surface to allow food to be placed in and out. The open front surface of the refrigerating compartment 20a may be opened and closed by a pair of refrigerating compartment doors 21a and 22a coupled to the main body 10a. The refrigerating compartment doors 21a and 22a may be rotatably coupled to the main body 10a. The open front surface of the freezing compartment 20a may be opened and closed by a freezing compartment door 31a provided to slide with respect to the main body 10a. The freezing compartment door 31a may be provided in a box shape with an open upper surface, and may include a front plate 32a forming an exterior and a drawer 33a coupled to a rear side of the front plate 32a.

However, the shape of the freezing compartment door 31a is not limited thereto, and the freezing compartment door 31a may be rotatably coupled to the main body 10a, in the same manner as the refrigerating compartment doors 21a and 22a.

A gasket may be provided along an edge portion of a rear surface of the refrigerating compartment doors 21a and 22a to block cold air in the refrigerating compartment 20a by sealing between the refrigerating compartment doors 21a and 22a and the main body 10a when the refrigerating compartment doors 21a and 22a are closed.

A cooling room may be formed in the main body 10a. The cooling room may be formed within the inner case 11a and may be disposed behind the storage compartments 20a and 30a. The refrigerator 1a according to one or more embodiments may include a cold air supply device 100 configured to supply cold air to a cooling space to be cooled. The cooling space may be the storage compartments 20a and 30a. The cold air supply device 100 may include the cooling cycle apparatus 100 according to one or more embodiments. Each component of the cooling cycle apparatus 100 may be accommodated within the main body 10a. The first heat exchanger 110, the second heat exchanger 120, the magnetic cooling device 130, and the auxiliary cooling device 140 of the cooling cycle apparatus 100 may be accommodated within the main body 10a of the refrigerator 1a. The first heat exchanger 110 may be disposed in a machine room, and the second heat exchanger 120 may be disposed in the cooling room.

However, the present disclosure is not limited thereto, and the first heat exchanger 110, the second heat exchanger 120, the magnetic cooling device 130, and the auxiliary cooling device 140 of the cooling cycle apparatus 100 may be not accommodated in the main body 10a, but may be disposed outside the main body 10a.

The refrigerator 1a may include the machine room formed at the lower rear of the main body 10a, a blower fan disposed within the machine room, and an exhaust hole formed in the main body 10a.

Each component of the cooling cycle apparatus 100 may be disposed in the machine room. At least one of a compressor, the first heat exchanger, and the auxiliary cooling device may be disposed within the machine room.

The blower fan may also be disposed within the machine room. The blower fan may be operated based on the operation of the first heat exchanger disposed in the machine room. The first heat exchanger may emit heat to the machine room, and air in the machine room may be heated. When the blower fan operates, the heated air in the machine room may be discharged to the outside of the machine room (e.g., to the outside of the main body) through the exhaust hole.

The exhaust hole may be formed in a wall of the outer case 12a. Theexhaust hole may be formed on a rear wall of the outer case 12a forming the machine room, and when the first heat exchanger 110 and the blower fan operate, the air in the machine room may be discharged into the outside of the main body 10a through the exhaust hole.

In addition, the shape of the refrigerator 1a may not be limited thereto, and may be provided in various types such as a Top Mounted Freezer (TMF) type refrigerator in which the freezing compartment is formed in the upper part of the main body 10 and the refrigerating compartment is formed in the lower part of the main body 10, or a Side By Side (SBS) refrigerator.

Further, the cold air supply device 100 may be applied to any refrigerator 1a as long as the refrigerator 1a is capable of receiving cold air from the cold air supply device 100.

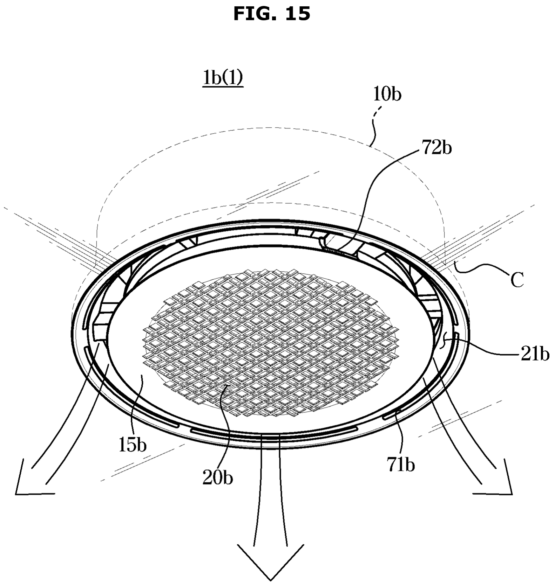

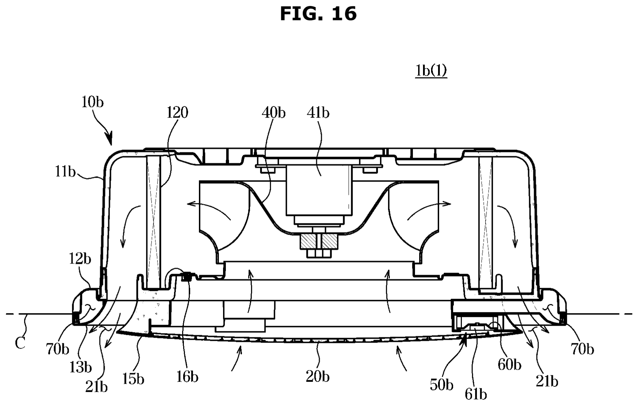

FIG. 15 is a perspective view of an appliance including the cooling cycle apparatus according to one or more embodiments. FIG. 15 illustrates an indoor unit 1b of an air conditioner as an example of the appliance 1. FIG. 16 is a side cross-sectional view of the appliance including the cooling cycle apparatus according to one or more embodiments. FIG. 16 is a side cross-sectional view of the indoor unit of the air conditioner of FIG. 15.

Referring to FIGS. 15 and 16, the air conditioner including the cooling cycle apparatus 100 according to one or more embodiments may include the indoor unit 1b configured to absorb heat and configured to supply cold air to a cooling space to be cooled, and an outdoor unit configured to emit heat to an outdoor space. The cooling space may be a room in which the indoor unit 1b of the air conditioner is installed.

In the air conditioner according to one or more embodiments, the first heat exchanger 110 of the cooling cycle apparatus 100 may be disposed in the outdoor unit, and the second heat exchanger 120 may be disposed in the indoor unit 1b.

The indoor unit 1b of the air conditioner may be installed on a ceiling C. At least a portion of the indoor unit 1b of the air conditioner may be embedded in the ceiling C.

The indoor unit 1b of the air conditioner may include a housing 10b including an intake port 20b and a discharge port 21b, a heat exchanger 120 disposed inside the housing 10b, and a blower fan 40b configured to move air.

The housing 10b may have an approximately circular shape. The housing 10b may be composed of an upper housing 11b, a middle housing 12b coupled to a lower side of the upper housing 11b, and a lower housing 13b coupled to a lower side of the middle housing 12b. At least a portion of the upper housing 11b and the middle housing 12b may be embedded in the ceiling C.

The intake port 20b through which air is drawn may be formed in a central portion of the lower housing 13b, and the discharge port 21b through which air is discharged may be formed on a radial outer side of the intake port 20b. The discharge port 21b may have an approximately circular shape when viewed in the vertical direction.

With this structure, the indoor unit 1b of the air conditioner may intake air from the lower side, cool or heat the air, and then discharge the cooled or heated air back to the lower side.

A grille 15b may be coupled to a lower portion of the lower housing 13b to filter out dust from the air drawn into the intake port 20b.

The heat exchanger 120 may be the second heat exchanger 120 of the cooling cycle apparatus 100.

The heat exchanger 120 may have an approximately circular shape when viewed in the vertical direction. The heat exchanger 120 may be placed on a drain tray 16b to allow condensed water generated from the heat exchanger 120 to be collected in the drain tray 16b.

The blower fan 40b may be provided inside the heat exchanger 120 with respect to a radial direction. The blower fan 40b may be a centrifugal fan configured to draw air in an axial direction and discharge the air to the radial direction. The indoor unit 1b of the air conditioner may be provided with a blowing motor 41b for driving the blower fan 40b.

With this configuration, the indoor unit 1b of the air conditioner may draw indoor air, cool the air, and then discharge the cooled air into the room, or the indoor unit 1b may draw indoor air, heat the air, and then discharge the heated air into the room.

The indoor unit 1b of the air conditioner may further include an airflow control device 50b configured to control a discharge airflow.

The airflow control device 50b may draw air around the discharge port 21b and change a pressure of the air, thereby controlling a direction of the discharge airflow. Additionally, the airflow control device 50b may control an intake amount of air around the discharge port 21b. The airflow control device 50b may control the direction of the discharge airflow by controlling the intake amount of air around the discharge port 21b. The airflow control device 50b may control an angle of the discharge airflow.

When the airflow control device 50b draws air around the discharge port 21b, the airflow control device 50b may draw air from one lateral side of a moving direction of the discharge airflow. At this time, an angle, at which a moving direction of air is changed, may be regulated according to the intake amount of air. In a state in which the intake amount is small, the moving direction may be changed to a small angle, and in a state in which the intake amount is large, the moving direction may be changed to a large angle.

The airflow control device 50b may discharge the drawn air to the lateral side of the moving direction of the discharge airflow. Particularly, the airflow control device 50b may discharge air in a direction opposite to the direction in which the air is drawn. As a result, the angle of the discharge airflow may be increased, and the airflow control may be performed more smoothly.

The airflow control device 50b may draw air from a radial outer side of the discharge port 21b (or from an upper side of the discharge airflow). In this way, because the airflow control device 50b draws air from the radial outer side of the discharge port 21b, the discharge airflow may spread widely from the radial center of the discharge port 21b to the radial outside.

The airflow control device 50b may include an airflow control fan 60b configured to generate a suction force to draw in air around the discharge port 21b, an airflow control motor 61 for driving the airflow control fan 60b, and a guide flow path 70b provided to guide air that is drawn by the airflow control fan 60b.

In addition, according to one or more embodiments, a centrifugal fan is used as the airflow control fan 60b, but the present disclosure is not limited thereto. Alternatively, various fans such as an axial flow fan, a transverse flow fan, and a mixed flow fan may be used according to design specifications.

The guide flow path70b connects an inlet 71b provided to draw air around the discharge port 21b, and an outlet 72b provided to discharge the drawn air. When a flow path connecting the intake port 20b and the discharge port 21b is defined as a main flow path, the guide flow path 70b may be formed by branching from the main flow path.

The inlet 71b may be composed of a plurality of slits having an arc shape. The plurality of slits may be arranged to be spaced apart from each other at a predetermined distance along a circumferential direction.

The outlet 72b may be located around the discharge port 21b on the opposite side of the inlet 71b.

The guide flow path 70b is formed in the circumferential direction on the outside of the housing 10b. Air drawn through the inlet 71b may be discharged through the outlet 72b by passing through the guide flow path 70b.

With this configuration, the indoor unit of the air conditioner according to one or more embodiments may control the discharge airflow without a blade structure. Accordingly, because there is no interference by the blade, the discharge amount may be increased and flow noise may be reduced.

The discharge port of the indoor unit of the air conditioner according to one or more embodiments may be provided in a circular shape, and the housing and the heat exchanger may also be provided in a circular shape. Accordingly, the aesthetics may be improved through a differentiated design, and because the blower fan has a circular shape, air may flow naturally and pressure loss may be reduced. Therefore, the cooling or heating performance of the air conditioner may be increased.

According to one or more embodiments, the heat exchanger 120 disposed in the indoor unit 1b of the air conditioner may be the second heat exchanger 120 of the cooling cycle apparatus 100, and the heat exchanger disposed in the outdoor unit may be the first heat exchanger 110 of the cooling cycle apparatus 100.

FIGS. 16 and 17 illustrate the ceiling-type indoor unit 1b, but the indoor unit 1b of the air conditioner is not limited thereto. Alternatively, the cooling cycle apparatus 100 according to one embodiment may be applied to the standing-type indoor unit 1b, and the wall-mounted indoor unit 1b.

The cooling cycle apparatus 100 according to one or more embodiments may include the first heat exchanger 110 configured to emit heat and the second heat exchanger 120 configured to absorb heat, the magnetic cooling device 130 including the magnetocaloric material 131, and configured to heat a fluid flowing into the first heat exchanger, and configured to cool a fluid flowing into the second heat exchanger, and the auxiliary cooling device 140 including the heater 141 configured to heat the fluid that is heated in the magnetic cooling device and flows to the first heat exchanger, and the cooler 142 configured to cool the fluid that is cooled in the magnetic cooling device and flows to the second heat exchanger.

The auxiliary cooling device 140 may include the thermoelectric element 143 configured to heat the heater and cool the cooler. The heater may be disposed on one side of the thermoelectric element 143 and the cooler may be disposed on another side of the thermoelectric element.

The cooling cycle apparatus 100 may further include the first pipe 161 to allow the fluid to flow from the magnetic cooling device to the heater and to form the heating flow paths141a, 141b, 141c, and 141d passing through the heater, and the second pipe 162 to allow the fluid to flow from the magnetic cooling device to the cooler and to form the cooling flow paths 142a, 142b, 142c, and 142d passing through the cooler. The heating flow path and the cooling flow path may be opened to allow the fluid, which is cooled in the magnetic cooling device, to be cooled by passing through the cooler while the fluid, which is heated in the magnetic cooling device, is heated by passing through the heater.

The cooling cycle apparatus 100 may further include the first valve 138 installed in the first pipe to open and close the heating flow path, the second valve 139 installed in the second pipe to open and close the cooling flow path, and the controller 20 configured to control the first valve and the second valve. The controller may operate the first valve and the second valve to allow the fluid, which is cooled in the magnetic cooling device, to be cooled by passing through the cooler while the fluid, which is heated in the magnetic cooling device, is heated by passing through the heater.

The magnetic cooling device 130 may include the first magnetocaloric module 134 including the first magnetocaloric material 131 and the first internal flow path 130e in which the first magnetocaloric material is disposed, and configured to heat the fluid, which flows from the second heat exchanger to the heater, based on a change in a magnetic field applied to the first magnetocaloric material, and the second magnetocaloric module 135 including the second magnetocaloric material 131 and the second internal flow path 130e in which the second magnetocaloric material is disposed, and configured to cool the fluid, which flows from the first heat exchanger to the cooler, based on a change in a magnetic field applied to the second magnetocaloric material. The first internal flow path may communicate with the heating flow path and the second internal flow path may communicate with the cooling flow path so as to allow the fluid, which is cooled in the second magnetocaloric module, to be cooled by passing through the cooler while the fluid, which is heated in the first magnetocaloric module, is heated by passing through the heater.

The first magnetocaloric module may include the first communication flow paths 130f and 134a to connect the first internal flow path and the heating flow path to allow a fluid in the first internal flow path to flow from the second heat exchanger to the heater, and the second communication flow paths 130g and 134b to connect the first internal flow path and the cooling flow path to allow a fluid in the first internal flow path to flow from the first heat exchanger to the cooler. The second magnetocaloric module may include the first communication flow paths 130f and 135a to connect the second internal flow path and the heating flow path to allow a fluid in the second internal flow path to flow from the second heat exchanger to the heater, and the second communication flow paths 130g and 135b to connect the second internal flow path and the cooling flow path to allow a fluid in the second internal flow path to flow from the first heat exchanger to the cooler. The controller 200 may control the first valve 138 to open the first communication flow path of the first magnetocaloric module and to close the first communication flow path of the second magnetocaloric module, and the controller 200 may control the second valve 139 to close the second communication flow path of the first magnetocaloric module and to open the second communication flow path of the second magnetocaloric module.

The fluid may be a liquid.

The cooler 242 may include the first heat exchange portion 242a configured to exchange heat with a fluid outside of the cooler, and the second heat exchange portion 242b configured to cool the fluid flowing from the magnetic cooling device to the second heat exchanger.

The fluid flowing through the second heat exchange portion of the cooler may be a liquid.

The cooling cycle apparatus 100 may further include the first tank 151 configured to store the fluid, which is heated from the heater, to supply the fluid to the first heat exchanger, and the second tank 152 configured to store the fluid, which is cooled from the cooler, to supply the fluid to the second heat exchanger.

The first tank 151 may be disposed downstream of the heater and upstream of the first heat exchanger, and the second tank 152 may be disposed downstream of the cooler and upstream of the second heat exchanger.

The fluid stored in the first tank 151 may be in contact with the heater, and the fluid stored in the second tank 152 may be in contact with the cooler.

The magnetocaloric material may be provided in plurality. The plurality of magnetocaloric materials may have different Curie temperatures. The magnetic cooling device may further include the magnet 132 configured to be rotatable on an outside of the magnetocaloric materials with respect to the magnetocaloric materials so as to apply a magnetic field to the plurality of magnetocaloric materials, and the driver 133 configured to rotate the magnet.

The cooling cycle apparatus according to one or more embodiments may include the first heat exchanger 110 and the second heat exchanger 120, the magnetic cooling device 130 including the magnetocaloric material 131, and configured to heat a fluid flowing into the first heat exchanger, and configured to cool a fluid flowing into the second heat exchanger, the auxiliary cooling device 241 configured to heat the fluid that is heated in the magnetic cooling device and flows to the first heat exchanger, and the auxiliary cooling device 242 configured to cool the fluid that is cooled in the magnetic cooling device and flows to the second heat exchanger. The auxiliary cooling device 242 may include the first heat exchange portion 242a configured to emit heat to an external fluid, and the second heat exchange portion 242b configured to absorb heat from the fluid that is cooled in the magnetic cooling device and flows to the second heat exchanger.

The auxiliary cooling device 241 may include the first heat exchange portion 241a configured to absorb heat from a fluid outside of the auxiliary cooling device, and the second heat exchange portion 241b configured to emit heat to the fluid flowing from the magnetic cooling device to the first heat exchanger.

The appliance according to one or more embodiments may include the cooling cycle apparatus 100 configured to supply cold air to the cooling spaces 20a and 30a. The cooling cycle apparatus 100 may include the first heat exchanger 110 configured to emit heat and the second heat exchanger 120 configured to absorb heat from air that is supplied to the cooling space, the magnetic cooling device 130 including the magnetocaloric material 131, and configured to heat a fluid flowing into the first heat exchanger, and configured to cool a fluid flowing into the second heat exchanger, and the auxiliary cooling device 140 including the heater 141 configured to heat the fluid that is heated in the magnetic cooling device and flows to the first heat exchanger, and the cooler 142 configured to cool the fluid that is cooled in the magnetic cooling device and flows to the second heat exchanger.

The auxiliary cooling device 140 may include the thermoelectric element 143 configured to heat the heater and cool the cooler. The heater may be disposed on one side of the thermoelectric element 143 and the cooler may be disposed on the other side of the thermoelectric element.

The cooling cycle apparatus 100 may further include the first pipe 161 provided to allow the fluid to flow from the magnetic cooling device to the first heat exchanger and provided to form the heating flow paths141a, 141b, 141c, and 141d penetrating the heater, and the second pipe 162 provided to allow the fluid to flow from the magnetic cooling device to the second heat exchanger and provided to form the cooling flow paths 142a, 142b, 142c, and 142d penetrating the cooler. The heating flow path and the cooling flow path may be opened to allow the fluid, which is cooled in the magnetic cooling device, to be cooled by passing through the cooler while the fluid, which is heated in the magnetic cooling device, is heated by passing through the heater.

The cooling cycle apparatus 100 may further include the first valve 138 installed in the first pipe to open and close the heating flow path, the second valve 139 installed in the second pipe to open and close the cooling flow path, and the controller 20 configured to control the first valve and the second valve. The controller may operate the first valve and the second valve to allow the fluid, which is cooled in the magnetic cooling device, to be cooled by passing through the cooler while the fluid, which is heated in the magnetic cooling device, is heated by passing through the heater.

While certain example embodiments the disclosure have been particularly shown and described , it will be understood that various changes in form and details may be made therein without departing from the spirit and scope of the following claims.

## Claims

1. A cooling cycle apparatus comprising:
a first heat exchanger configured to emit heat and a second heat exchanger configured to absorb heat;
a magnetic cooling device comprising a magnetocaloric material and configured to heat a first fluid flowing into the first heat exchanger and cool a second fluid flowing into the second heat exchanger; and
an auxiliary cooling device comprising a heater configured to further heat the first fluid flowing into the first heat exchanger, and a cooler configured to further cool the second fluid flowing to the second heat exchanger.

2. The cooling cycle apparatus of claim 1, wherein the auxiliary cooling device further comprises a thermoelectric element configured to heat the heater and cool the cooler, and
wherein the heater is on one side of the thermoelectric element and the cooler is on another side of the thermoelectric element.

3. The cooling cycle apparatus of claim 2, further comprising:
a first pipe configured to allow the first fluid to flow from the magnetic cooling device to the first heat exchanger and to form a heating flow path through the heater; and
a second pipe configured to allow the second fluid to flow from the magnetic cooling device to the second heat exchanger and to form a cooling flow path through the cooler,
wherein the heating flow path and the cooling flow path are opened to allow the second fluid to be further cooled by passing through the cooler while allowing the first fluid to be further heated by passing through the heater.

4. The cooling cycle apparatus of claim 3, further comprising:
a first valve in the first pipe and configured to open and close the heating flow path;
a second valve in the second pipe and configured to open and close the cooling flow path; and
a controller configured to control the first valve and the second valve,
wherein the controller operates the first valve and the second valve to allow the second fluid to be further cooled by passing through the cooler while allowing the first fluid to be further heated by passing through the heater.

5. The cooling cycle apparatus of claim 4, wherein the magnetic cooling device further comprises:
a first magnetocaloric module comprising a first magnetocaloric material and a first internal flow path in which the first magnetocaloric material is disposed, and configured to heat the first fluid based on a change in a magnetic field applied to the first magnetocaloric material; and
a second magnetocaloric module comprising a second magnetocaloric material and a second internal flow path in which the second magnetocaloric material is disposed, and configured to cool the second fluid based on a change in a magnetic field applied to the second magnetocaloric material,
wherein the first internal flow path communicates with the heating flow path and the second internal flow path communicates with the cooling flow path so as to allow the second fluid to be further cooled by passing through the cooler while allowing the first fluid to be further heated by passing through the heater.

6. The cooling cycle apparatus of claim 5, wherein the first magnetocaloric module further comprises:
a first communication flow path configured to connect the first internal flow path and the heating flow path and to allow the first fluid in the first internal flow path to flow from the second heat exchanger to the heater; and
a second communication flow path configured to connect the first internal flow path and the cooling flow path and to allow the second fluid in the first internal flow path to flow from the first heat exchanger to the cooler,
wherein the second magnetocaloric module further comprises:
a third communication flow path configured to connect the second internal flow path and the heating flow path and to allow the first fluid in the second internal flow path to flow from the second heat exchanger to the heater; and
a fourth communication flow path configured to connect the second internal flow path and the cooling flow path and to allow the second fluid in the second internal flow path to flow from the first heat exchanger to the cooler, and
wherein the controller is further configured to control the first valve to open the first communication flow path of the first magnetocaloric module and to close the third communication flow path of the second magnetocaloric module, and control the second valve to close the second communication flow path of the first magnetocaloric module and to open the fourth communication flow path of the second magnetocaloric module.

7. The cooling cycle apparatus of claim 6, wherein the first fluid is a liquid.

8. The cooling cycle apparatus of claim 1, wherein the cooler comprises:
a first heat exchange portion configured to exchange heat with the first fluid outside of the cooler; and
a second heat exchange portion configured to cool the second fluid flowing from the magnetic cooling device to the second heat exchanger.

9. The cooling cycle apparatus of claim 8, wherein the second fluid flowing through the second heat exchange portion of the cooler is a liquid.

10. The cooling cycle apparatus of claim 1, further comprising:
a first tank configured to store the first fluid prior to being supplied to the first heat exchanger; and
a second tank configured to store the second fluid prior to being supplied to the second heat exchanger.

11. The cooling cycle apparatus of claim 10, wherein the first tank is downstream from the heater and upstream from the first heat exchanger, and
the second tank is downstream from the cooler and upstream from the second heat exchanger.

12. The cooling cycle apparatus of claim 10, wherein the first fluid stored in the first tank contacts the heater, and
wherein the second fluid stored in the second tank contacts the cooler.

13. The cooling cycle apparatus of claim 1, wherein the magnetocaloric material is provided in plurality,
wherein the plurality of magnetocaloric materials have different Curie temperatures, and
wherein the magnetic cooling device further comprises:
a magnet configured to be rotatable on an outside of the plurality of magnetocaloric materials with respect to the plurality of magnetocaloric materials and apply a magnetic field to the plurality of magnetocaloric materials; and
a driver configured to rotate the magnet.
\
